# EUROPÄISCHE PATENTSCHRIFT

(11) **EP 3 201 826 B1**
(45) Veröffentlichungstag und Bekanntmachung des Hinweises auf die Patenterteilung: **13.04.2022**
(21) Anmeldenummer: 15770846.2
(22) Anmeldetag: 23.09.2015
(51) Int. Cl.: G06K 9/00, G06K 9/46, G06K 9/62, G06T 7/00, G06T 11/00

(54) **VERFAHREN UND DATENVERARBEITUNGSVORRICHTUNG ZUR COMPUTERGESTÜTZTEN HAARFARBBERATUNG**
METHOD AND DATA-PROCESSING DEVICE FOR COMPUTER-ASSISTED HAIR COLOURING GUIDANCE
PROCÉDÉ ET DISPOSITIF DE TRAITEMENT DE DONNÉES POUR LE CONSEIL, ASSISTÉ PAR ORDINATEUR, DE COULEUR DE CHEVEUX

(30) Priorität: 02.10.2014 DE 102014220077
(43) Veröffentlichungstag der Anmeldung: 09.08.2017
(73) Patentinhaber: Henkel AG & Co. KGaA, 40589 Düsseldorf (DE)
(72) Erfinder: KOWALCZYK, Thomas, 42369 Wuppertal (DE); GEISSEL, Gesa, 40479 Düsseldorf (DE)
(86) Internationale Anmeldenummer: PCT/EP2015/071839
(87) Internationale Veröffentlichungsnummer: WO 2016/050576

(56) Entgegenhaltungen:
- EP-A1- 1 147 722
- CA-A1- 2 651 539
- US-A1- 2010 128 141
- US-A1- 2012 075 331

## Beschreibung

Die Erfindung betrifft eine computergestützte Haarfarbberatung.

Eine computergestützte Haarfarbberatung kann beispielsweise dazu genutzt werden, einem Nutzer einen visuellen Eindruck davon zu vermitteln, wie er mit einer gewählten Wunschhaarfarbe aussehen würde. Beispielsweise kann in einem digitalen Bild des Nutzers, auf welcher unter anderem sein Haar zu sehen ist, ein Bereich des Bildes ermittelt werden, in welchem Haar dargestellt ist. Dieser Haarbereich kann in der Wunschhaarfarbe neu eingefärbt werden.

Manche herkömmliche Programme ermitteln den Haarbereich eines digitalen Bildes, indem beispielsweise eine Häufigkeitsverteilung von Farbwerten einzelner Bildpunkte des digitalen Bildes ermittelt wird. Eine Untergruppe der Bildpunkte, beispielsweise eine Gruppe von Bildpunkten, welche in einem Farbraum nahe bei einem Farbwert einer z.B. manuell vorausgewählten, Haarfarbe liegen, kann dem Haarbereich zugeordnet werden.

Andere herkömmliche Programme können eine Haarstruktur, beispielsweise eine räumliche Nähe und/oder einen linearen Verlauf von Bildpunkten gleicher oder ähnlicher Farbe, nutzen, um den Haarbereich, beispielsweise insbesondere Teile des Haars, welche nicht als geschlossene Fläche abgebildet sind, z.B. Haarsträhnen, zu erkennen.

Andere herkömmliche Programme können eine Farbinformation und eine Strukturinformation kombinieren.

Allerdings kann es beim Ermitteln des Bereichs, in welchem Haar dargestellt ist, dazu kommen, dass nicht alles Haar als solches erkannt wird (dies kann auch als Mindererkennung bezeichnet werden), und/oder dass Bereiche, in welchen kein Haar dargestellt ist, dem Haarbereich zugeordnet werden (dies kann auch als Übererkennung bezeichnet werden).

Haar, beispielsweise Haar mit einer natürlichen Haarfarbe, kann typischerweise nicht nur einen Farbton aufweisen, sondern eine Mehrzahl von Farbtönen. Beispielsweise kann eine oberste Haarschicht oder ein Haarbereich an Haarspitzen einen anderen Farbton aufweisen als ein Hauptteil des Haars, beispielsweise weil das Haar durch Sonneneinstrahlung gebleicht ist. Alternativ oder zusätzlich kann das Haar am Haaransatz einen anderen Farbton aufweisen als der Hauptteil des Haars, beispielsweise weil das Haar dort gerade erst aus der Kopfhaut herausgewachsen ist und am Wenigsten lange der Sonneneinstrahlung ausgesetzt war. Diese verschiedenen Farbtöne können Bereichen im Farbraum entsprechen, welche so weit voneinander entfernt sind, dass sie von einem herkömmlichen Programm nicht alle als Farbtöne des Haars erkannt werden, und somit nicht alle Bereiche, in welchen Haar abgebildet ist, als solche markiert werden. Um einen solchen Fall von Mindererkennung zu vermeiden, kann ein Auswahlbereich um einen als Haarfarbton bekannten Farbton bestimmt werden, innerhalb dessen ein Bildpunkt dem Haarbereich zugeordnet wird (dem Auswahlbereich kann für einen Fall eines in sämtliche Richtungen gleich großen Abstands vom Haarfarbton ein so genannter Auswahlradius zugeordnet sein). Der Auswahlbereich kann so groß gemacht werden, dass im Wesentlichen jeder Teil des Bildes, auf welchem Haar abgebildet ist, auch als solcher bestimmt wird. Dies kann jedoch dazu führen, dass auch ein Bereich des Bildes, welcher einen Farbton aufweist, der innerhalb des Auswahlbereichs liegt, aber kein Haar abbildet, beispielsweise ein Bereich, in welchem Haut oder Kleidung zu sehen ist, dem Haarbereich zugeordnet wird.

Bei herkömmlichen Haarfarbberatungsprogrammen kann ein einheitlicher Farbton, welcher beispielsweise dem Wunschfarbton entsprechen kann, genutzt werden, um einen als Haarbereich bestimmten Bereich des Fotos neu einzufärben. Dies kann jedoch dazu führen, dass das Foto, beispielsweise wegen der lediglich einen Farbton aufweisenden neuen Haarfarbe, mit dem neu eingefärbten Haarbereich unnatürlich wirkt. Das kann dazu führen, dass ein Färben des Haars nicht wünschenswert erscheint.

Wenn ein Foto mit neu eingefärbtem Haarbereich natürlicher wirken würde, könnte damit eine Bereitschaft, das Haar zu färben, gesteigert werden.

Dokument EP1147722 A1 beschreibt ein Verfahren zur Einfärbung der Haare eines Nutzers auf einem digitalen Bild in eine gewünschte Haarfarbe. Das Verfahren beinhaltet Mittel zur Erkennung von Haaren auf dem Bild. Dokument US2010/0128141 A1 beschreibt ein Verfahren zur Bestimmung von Ähnlichkeiten zwischen Bildern anhand eines Unterschieds zwischen den Bildern. Dokument CA2651539 A1 beschreibt ein Verfahren zur Änderung der Haarfarbe einer Person in einem digitalen Farbbild nach der Identifizierung von Haarprobenregionen im Bild. Dokument US2012/0075331 A1 beschreibt ein Verfahren zur Auswahl einer Haarregion innerhalb eines digitalen Bildes und zur Änderung der Farbe der Haare auf dem digitalen Bild.

In verschiedenen Ausführungsformen wird ein computergestütztes Verfahren bereitgestellt, welches sowohl die Mindererkennung, als auch die Übererkennung vermeidet, in anderen Worten ein computergestütztes Verfahren, welches sämtliches Haar, beispielsweise das Haupthaar, und nur das Haar, in einem digitalen Bild dem Haarbereich zuordnet.

Ein computergestütztes Verfahren zur computergestützten Haarfarbberatung kann Haar auf einem Bild, z.B. einem digitalen Foto, eines Nutzers in einer neuen Wunschfarbe einfärben.

Ferner wird in verschiedenen Ausführungsbeispielen ein Verfahren zur computergestützten Haarfarbberatung bereitgestellt, welches eine neue Wunschhaarfarbe nicht lediglich anhand eines

Färbeprodukts bestimmt, sondern beispielsweise auch anhand einer Abbildung einer Person mit Haar, welches mit der Wunschhaarfarbe gefärbt ist.

In verschiedenen Ausführungsbeispielen wird ein Verfahren zur computergestützten Haarfarbberatung bereitgestellt.

Unter einem digitalen Bild kann hierin ein Datenpaket verstanden werden, welches von einem Datenverarbeitungssystem als zweidimensionale (flächige) Anordnung von Bildpunkten darstellbar ist, beispielsweise in einem Koordinatensystem, welches eine x-Achse und eine y-Achse aufweist, wobei jedem Bildpunkt zumindest eine Farbinformation zugeordnet ist, welche beispielsweise als Farbe eines Pixels eines Monitors oder eines gedruckten Punktes eines ausgedruckten Bilds darstellbar ist. Dabei kann das digitale Bild beispielsweise ein mit einer Digitalkamera aufgenommenes Foto, ein Einzelbild einer mit einer digitalen Kamera aufgenommenen Videosequenz (wobei das Verfahren dann beispielsweise an einer Mehrzahl von Einzelbildern der Videosequenz angewandt werden kann), eine eingescannte Abbildung, eine mittels Formatumwandlung aus einem digitalen Bild erhaltenes digitales Bild oder jedes beliebige andere von einem Datenverarbeitungssystem als zweidimensionales farbiges Bild darstellbares Datenpaket sein.

Das Datenverarbeitungssystem kann beispielsweise einen Computer, z.B. mit angeschlossenem Bildschirm, z.B. einen Laptop oder einen Tablet aufweisen. Das Datenverarbeitungssystem kann ferner beispielsweise ein Smartphone oder jedes beliebige andere Datenverarbeitungssystem aufweisen, welches das Datenpaket in die zugehörige zweidimensionale Anordnung farbiger Bildpunkte umwandeln und diese ggf. als Bild darstellen kann.

Die Begriffe Haarbereich und Haarbereichfläche werden hierin synonym verwendet. Der Haarbereich kann eine Mehrzahl von Bildpunkten eines digitalen Bildes aufweisen, welche Haar abbilden und welche eine zusammenhängende oder aus einer Mehrzahl von Einzelflächen bestehende Fläche bilden können. Eine Ebene, in welcher der Haarbereich angeordnet sein kann, kann beispielsweise durch die x-Achse und die y-Achse des digitalen Bildes bestimmt sein.

Unter einer "Farbe" kann hierin ein Zusammenwirken eines Farbtons (d.h. eines spektralen Farbeindrucks, auch als Buntton bezeichnet, was als das verstanden werden kann, was als die "eigentliche Farbe" angesehen wird), einer Farbintensität (d.h. wie intensiv die Farbe erscheint, z.B. verglichen mit einem neutralen Grau, was auch als Sättigung, Farbsättigung, Buntheit, Chromatizität oder Farbtiefe bezeichnet wird) und einer Helligkeit (d.h. wie hell oder dunkel die Farbe erscheint) verstanden werden.

In verschiedenen Ausführungsbeispielen wird bei dem Verfahren eine Statistik häufiger Haarfarben genutzt, um einen Auswahlbereich im Farbraum, in welchem Bildpunkte eines digitalen Bildes einem Haarbereich zugeordnet werden können, so zu bestimmen, dass sämtliches oder im Wesentlichen sämtliches Haar, z.B. Haupthaar (d.h. Kopfhaar ohne Augenbrauen, Wimpern, Bart usw.), in einem digitalen Bild dem Haarbereich zugeordnet wird, jedoch keine oder im Wesentlichen keine Bereiche, welche kein Haar, z.B. kein Haupthaar, abbilden, dem Haarbereich zugeordnet werden.

In verschiedenen Ausführungsbeispielen wird die Statistik häufiger Haarfarben ermittelt, indem für eine Mehrzahl von Haarfarben, welche beim Menschen häufig vorkommen, jeweils für mindestens eine Farbinformation eine typische Häufigkeitsverteilung ermittelt wird. Die Farbinformation kann beispielsweise eine in einem Farbraum parametrisierte Farbinformation sein. Beispielsweise kann die Farbinformation mittels einer Mehrzahl von Parametern so charakterisiert sein, dass eine Farbe mittels der Mehrzahl von Parametern eindeutig bestimmt sein kann.

In verschiedenen Ausführungsbeispielen weist die Farbinformation beispielsweise eine Parametrisierung in einem bekannten Farbraum auf, beispielsweise in einem L*a*b*-Farbraum (wobei L* die Helligkeit einer Farbe angibt, a* den Grün- und Rotanteil und b* den Blau-und Gelbanteil der Farbe) in einem RGB-Farbraum durch Farbanteile in Rot, Grün und Blau, in einem CMYK-Farbraum durch Farbanteile in Cyan, Magenta, Gelb und Schwarz, oder in einem beliebigen anderen Farbraum.

Unter dem Begriff "Farbton" wird hierin, wie oben beschrieben, der spektrale Farbeindruck einer Farbe verstanden werden, unabhängig davon, wie dieser parametrisiert ist, beispielsweise als ein Punkt in einem zweidimensionalen Farbraum (z.B. a*b* des L*a*b*-Systems) oder ein Verhältnis von Farbanteilen (wie z.B. beim RGB-Farbraum oder beim CMYK-Farbraum).

Eine Haarfarbenstatistik, beispielsweise die Statistik häufiger Haarfarben oder eine Statistik durch Färben erzielbarer Haarfarben, weist in verschiedenen Ausführungsbeispielen jeweils eine Häufigkeitsverteilung mindestens einer Haarfarbinformation für eine Mehrzahl von Haarfarben, beispielsweise für eine Mehrzahl häufiger Haarfarben oder für eine Mehrzahl durch Färben erzielbarer Haarfarben, auf. Der Häufigkeitsverteilung der mindestens einen Haarfarbinformation ist beispielsweise ein am häufigsten auftretender Wert der Haarfarbinformation entnehmbar. Ferner sind z.B. ein oder mehrere Werte der Haarfarbinformation entnehmbar, welche seltener auftreten als der Wert der am häufigsten auftretenden Haarfarbinformation.

Wie oben beschrieben weist eine Haarfarbe, beispielsweise eine häufige Haarfarbe oder eine durch Färben erzielbare Haarfarbe, nicht nur einen Farbton auf, sondern eine Mehrzahl von Farbtönen. Dabei kann ein Farbton bei dem Haar häufiger zu sehen sein, beispielsweise auf einem Bild, welches das Haar abbildet, als ein anderer Farbton oder mehrere andere Farbtöne. Anders ausgedrückt kann eine Haarfarbe anstelle eines einzigen Farbtons eine (ungleichmäßige) Haarfarbton-Häufigkeitsverteilung aufweisen. Der häufigste Farbton kann auch als Haar-Hauptfarbton bezeichnet werden.

Ferner kann mindestens ein Farbton, welcher bei dem Haar weniger häufig zu sehen ist als der mindestens eine Haar-Hauptfarbton, als Haar-Nebenfarbton bezeichnet werden.

Die Häufigkeitsverteilung der mindestens einen Farbinformation weist in verschiedenen Ausführungsbeispielen die Haarfarbton-Häufigkeitsverteilung auf.

Ferner weist die Häufigkeitsverteilung der mindestens einen Farbinformation in verschiedenen Ausführungsbeispielen analog zur Farbton-Häufigkeitsverteilung mit Hauptfarbton und Nebenfarbtönen eine Häufigkeitsverteilung einer Helligkeit mit einer Haupthelligkeit und mindestens einer Nebenhelligkeit, und/oder eine Häufigkeitsverteilung der Sättigung mit einer Hauptsättigung und mindestens einer Nebensättigung auf.

In verschiedenen Ausführungsbeispielen wird jeweils eine Gesamtheit der Mehrzahl der Farbinformations-Häufigkeitsverteilungen als eine Haarfarben-Statistik bezeichnet. In einem Fall, in welchem eine Mehrzahl häufiger Haarfarben als Grundlage für das Ermitteln der Farbinformations-Häufigkeitsverteilungen dient, ist die Haarfarben-Statistik eine Haarfarben-Statistik häufiger Haarfarben.

In einem Fall, in welchem eine Mehrzahl mittels Färbens erzielbarer Haarfarben als Grundlage für das Ermitteln der Farbinformations-Häufigkeitsverteilungen dient, ist die Haarfarben-Statistik eine Haarfarben-Statistik durch Färben erzielbarer Haarfarben.

Die Haarfarben-Statistik häufiger Haarfarben wird erstellt, indem jeweils mindestens ein digitales Bild von einer Mehrzahl von Personen erzeugt wird, wobei auf jedem der digitalen Bilder Haar der jeweils abgebildeten Person zu sehen ist, und wobei jede der Personen eine häufige Haarfarbe hat, wobei eine Gesamtheit der häufigen Haarfarben beispielsweise mehr als 70% der beim Menschen auftretenden Haarfarben aufweisen kann, z.B. mehr als 80%, z.B. mehr als 90%, z.B. mehr als 95%. Die häufigen Haarfarben können sich auf die im vorgesehenen regionalen Anwendungsgebiet des Verfahrens häufigen Haarfarben beziehen. Anhand der Mehrzahl digitaler Bilder, welche jeweils eine Haarfarbe der häufigen Haarfarben abbilden, kann für jede Haarfarbe der Mehrzahl häufiger Haarfarben eine Haarfarbinformations-Häufigkeitsverteilung ermittelt werden. In verschiedenen Ausführungsbeispielen ist die Haarfarbinformation in einem mediumunabhängigen Farbraum parametrisiert, beispielsweise in einem L*a*b*-Farbraum.

In verschiedenen Ausführungsbeispielen wird ein Verfahren zur computergestützten Haarfarbberatung bereitgestellt, welches ein Ermitteln einer Haarbereichfläche, in welcher Haare abgebildet sind, in einem digitalen Bild einer Person, auf welchem Haare zu sehen sind, aufweist, sowie ein Ermitteln einer Bildfarbinformations-Häufigkeitsverteilung, welche einer Häufigkeitsverteilung mindestens einer Farbinformation für eine Mehrzahl von Bildpunkten in dem digitalen Bild entspricht, und ein Vergleichen der Bildfarbinformations-Häufigkeitsverteilung mit einer Haarfarben-Statistik, wobei die Haarfarben-Statistik für eine Mehrzahl von Haarfarben jeweils zumindest eine Häufigkeitsverteilung mindestens einer Haarfarbinformation aufweist, wobei die Haarfarben-Statistik eine Statistik häufiger Haarfarben ist, die Mehrzahl von Haarfarben eine Mehrzahl von beim Menschen häufig vorkommenden Haarfarben, und wobei eine Gesamtheit der häufigen Haarfarben mehr als 70% der beim Menschen auftretenden Haarfarben aufweist.

Die Gesamtheit der häufigen Haarfarben kann z.B. mehr als 80%, z.B. mehr als 90%, z.B. mehr als 95% aufweisen.

In verschiedenen Ausführungsbeispielen wird für ein digitales Bild eine Bildfarbinformations-Häufigkeitsverteilung ermittelt. Die Bildfarbinformations-Häufigkeitsverteilung ordnet jeweils einem Bildfarbinformationswert eine Zahl von Bildpunkten in dem digitalen Bild der Person oder einem Teilbereich des Bildes der Person zu, welche den Bildfarbinformationswert aufweisen. Anders ausgedrückt ist jedem Bildfarbinformationswert eine Häufigkeit zugeordnet, mit welcher dieser Bildfarbinformationswert in dem Bild oder dem Teilbereich des Bildes vorkommt.

Beispielsweise weist die Bildfarbinformation einen Farbton, z.B. einen Bildfarbton, auf. Die Bildfarbinformations-Häufigkeitsverteilung ordnet dann jedem Farbton von einer Mehrzahl von Farbtönen eine Häufigkeit zu, mit welcher dieser Farbton in dem Bild oder dem Teilbereich des Bildes vorkommt, anders ausgedrückt eine Anzahl von Bildpunkten, welche den jeweiligen Farbton aufweist.

In verschiedenen Ausführungsbeispielen wird die Bildfarbinformations-Häufigkeitsverteilung mit der Haarfarbenstatistik verglichen, beispielsweise mit der Mehrzahl von Häufigkeitsverteilungen der mindestens einen Haarfarbinformation für die Mehrzahl von Haarfarben, beispielsweise für die Mehrzahl häufiger Haarfarben oder für die Mehrzahl durch Färben erzielbarer Haarfarben. Dabei betrifft die Bildfarbinformation dieselbe Art von Information wie die Haarfarbinformation. Beispielsweise betrifft die Farbinformation (die Bildfarbinformation und die Haarfarbinformation) einen Farbton. Anders ausgedrückt weist die Bildinformations-Häufigkeitsverteilung eine Verteilung von Häufigkeiten auf, mit welchen verschiedene Farbtöne in dem Bild vorkommen, d.h. wie viele der Mehrzahl von Bildpunkten in dem digitalen Bild jeweils welchen Farbton aufweisen. Die Haarfarbinformations-Häufigkeitsverteilung weist für jede Haarfarbe einer Mehrzahl von Haarfarben eine Verteilung von Häufigkeiten auf, mit welchen verschiedene Farbtöne bei einer Haarfarbe (z.B. der häufigen Haarfarbe oder der durch Färben erzielbaren Haarfarbe) vorkommen. Mittels des Vergleichens der Bildfarbinformations-Häufigkeitsverteilung mit der Haarfarbenstatistik wird in verschiedenen Ausführungsbeispielen eine ähnlichste Haarfarbinformations-Häufigkeitsverteilung ermittelt.

Dafür wird beispielsweise für jede Haarfarbinformations-Häufigkeitsverteilung der Mehrzahl von Haarfarbinformations-Häufigkeitsverteilungen ein Maß für einen Unterschied zwischen der Haarfarbinformations-Häufigkeitsverteilung und der Bildfarbinformations-Häufigkeitsverteilung ermittelt, beispielsweise als Summe von Beträgen von Differenzen der Haarfarbinformationshäufigkeit und der Bildfarbinformationshäufigkeit über die Mehrzahl von Farbinformationswerten, oder als Summe der Quadrate der Differenzen der Haarfarbinformationshäufigkeit und der Bildfarbinformationshäufigkeit über die Mehrzahl von Farbinformationswerten. Alternativ kann jedes andere Maß genutzt werden, welches es ermöglicht, eine ähnlichste Haarfarbinformations-Häufigkeitsverteilung aus der Mehrzahl von Haarfarbinformations-Häufigkeitsverteilungen zu bestimmen.

In verschiedenen Ausführungsbeispielen ist die ähnlichste Haarfarbinformations-Häufigkeitsverteilung diejenige Haarfarbinformations-Häufigkeitsverteilung aus der Mehrzahl von Haarfarbinformations-Häufigkeitsverteilungen, für welche das Maß für den Unterschied am kleinsten ist.

Jede der Farbinformations-Häufigkeitsverteilungen normiert kann sein, beispielsweise auf einen Wert von 100 für den größten Häufigkeitswert in jeder der Farbinformations-Häufigkeitsverteilungen. Damit kann vermieden werden, dass eine Haarfarbinformations-Häufigkeitsverteilung allein deshalb als ähnlichste Haarfarbinformations-Häufigkeitsverteilung ermittelt wird, weil ihre absoluten Häufigkeitswerte denen der Bildinformations-Häufigkeitsverteilung ähnlich sind.

In verschiedenen Ausführungsbeispielen wird ein Verfahren zur computergestützten Haarfarbberatung bereitgestellt, welches ein Ermitteln einer Haarbereichfläche, in welcher Haare abgebildet sind, in einem digitalen Bild einer Person, auf welchem Haare zu sehen sind, aufweist, sowie ein Ermitteln einer Bildfarbinformations-Häufigkeitsverteilung, welche einer Häufigkeitsverteilung mindestens einer Farbinformation für eine Mehrzahl von Bildpunkten in dem digitalen Bild entspricht, ein Vergleichen der Bildfarbinformations-Häufigkeitsverteilung mit einer Haarfarben-Statistik, wobei die Haarfarben-Statistik für eine Mehrzahl von Haarfarben jeweils zumindest eine Häufigkeitsverteilung mindestens einer Haarfarbinformation aufweist, und ein Ermitteln einer ähnlichsten Haarfarbinformations-Häufigkeitsverteilung aus der Haarfarben-Statistik, wobei die ähnlichste Haarfarbinformations-Häufigkeitsverteilung diejenige Häufigkeitsverteilung aus der Mehrzahl von Haarfarbinformations-Häufigkeitsverteilungen ist, die der Bildfarbinformations-Häufigkeitsverteilung am ähnlichsten ist, indem ein Maß für einen Unterschied zwischen der Haarfarbinformations-Häufigkeitsverteilung und der Bildfarbinformations-Häufigkeitsverteilung für die ähnlichste Haarfarbinformations-Häufigkeitsverteilung am kleinsten ist. Dabei kann das Maß für den Unterschied zwischen der Haarfarbinformations-Häufigkeitsverteilung und der Bildfarbinformations-Häufigkeitsverteilung beispielsweise eine Summe von Beträgen von Differenzen der Haarfarbinformationshäufigkeit und der Bildfarbinformationshäufigkeit über die Mehrzahl von Farbinformationswerten, oder eine Summe der Quadrate der Differenzen der Haarfarbinformationshäufigkeit und der Bildfarbinformationshäufigkeit über die Mehrzahl von Farbinformationswerten, oder jedes andere Maß sein, welches es ermöglicht, eine ähnlichste Haarfarbinformations-Häufigkeitsverteilung aus der Mehrzahl von Haarfarbinformations-Häufigkeitsverteilungen zu bestimmen.

In verschiedenen Ausführungsbeispielen wird die ähnlichste Haarfarbinformations-Häufigkeitsverteilung dazu genutzt, für eine Bestimmung des Haarbereichs, d.h. einer Haarbereichfläche, d.h. einer Fläche in dem digitalen Bild, in welcher Haar abgebildet ist, einen Bereich in einem Raum, welcher zumindest unter anderem durch die Farbinformation parametrisiert ist, zu beschränken. Dieser Bereich wird auch als Auswahlbereich bezeichnet. Anders ausgedrückt wird der Auswahlbereich so bestimmt, dass ein Bildpunkt aus der Mehrzahl von Bildpunkten des digitalen Bildes genau dann dem Haarbereich zugeordnet wird, wenn sein Farbinformationswert auch in der ähnlichsten Haarfarbinformations-Häufigkeitsverteilung vorkommt, anders ausgedrückt, wenn die mindestens eine Farbinformation bzw. der mindestens eine Farbinformationswert eines Bildpunktes mindestens einer Farbinformation bzw. mindestens einem Farbinformationswert in der ähnlichsten Haarfarbinformations-Häufigkeitsverteilung entspricht, beispielsweise wenn ein Farbton eines Bildpunktes einem in der ähnlichsten Haarfarbinformations-Häufigkeitsverteilung vorkommenden Farbton entspricht, z.B. gleich ist.

Damit kann eine Übererkennung vermieden oder vermindert werden, denn nur Bildpunkte, bei welchen die Farbinformation, beispielsweise der Farbton, einer für eine Haarfarbe typischen Farbinformation entspricht, werden dem Haarbereich zugeordnet. Anschaulich ausgedrückt ist der Auswahlbereich bezüglich der Farbinformation (z.B. ein Auswahlbereich im Farbraum) nicht willkürlich in z.B. alle Richtungen vergrößert, um möglichst alles Haar zu erfassen, sondern im Wesentlichen nur in die Richtungen vergrößert, in welchen auch Haar angetroffen werden kann.

Andererseits wird aber auch eine Mindererkennung vermieden oder vermindert, denn auch Bildpunkte, die zwar Haar abbilden, deren Farbinformation aber weit von einer häufigsten Farbinformation abweicht, werden als zum Haarbereich gehörig erfasst, wenn ihre Farbinformation, z.B. ihr Farbton, eine für die Haarfarbe typische (und deshalb in der ähnlichsten Haarfarbinformations-Häufigkeitsverteilung vorkommende) Farbinformation aufweist.

In verschiedenen Ausführungsbeispielen wird der Haarbereich, d.h. die Haarbereichfläche, d.h. die Bildpunkte, welche innerhalb der Haarbereichfläche liegen, mit einer Wunschhaarfarbe neu eingefärbt. Dabei wird das neu Einfärben so ausgeführt, dass die Wunschhaarfarbe nicht mit einer einheitlichen Haarfarbinformation, beispielsweise einem einheitlichen Farbton, dargestellt wird, sondern dass eine Verteilung hinsichtlich der Haarfarbinformation abgebildet wird, welche der Haarfarbinformations-Häufigkeitsverteilung für diese Haarfarbe, beispielsweise aus der Mehrzahl von mittels Färbens erzielbaren Haarfarben, entspricht. Damit kann ein natürlicherer Eindruck von einem zu erwartenden Färbeergebnis vermittelt werden.

In verschiedenen Ausführungsbeispielen ist ein Farbraum, dem die Farbinformation (Haarfarbinformation und Bildfarbinformation) entstammt, so beschaffen, dass eine ermittelte oder dargestellte Farbe unabhängig von einem Medium ist, durch welches die Farbe ermittelt oder dargestellt wird (z.B. Bildschirm, Drucker, Scanner, menschliches Auge, usw.). Der Farbraum ist beispielsweise ein L*a*b*-Farbraum sein, die Farbinformation ein beispielsweise mittels a* und b* parametrisierter Farbton. Die einheitliche Darstellung in dem mediumunabhängigen Farbraum ermöglicht es, ein realitätsnahes zu erwartendes Färbeergebnis zu präsentieren.

Zu diesem Zweck können Haare von Models mit einer Mehrzahl von Haarfärbemitteln gefärbt werden. Die gefärbten Haare jedes Models können fotografiert und als digitales Bild gespeichert werden, wobei die Farbinformation in dem mediumunabhängigen Farbraum, z.B. dem L*a*b*-Farbraum gespeichert bzw. in diesen umgewandelt werden kann. Jede der mittels Färbens erzielten Haarfarben kann einer der mittels Färbens erzielbaren Haarfarben entsprechen. Für jede der mittels Färbens erzielbaren Haarfarben kann anhand des digitalen Bildes eine Häufigkeitsverteilung der Haarfarbinformation ermittelt werden, beispielsweise eine Häufigkeitsverteilung der Farbtöne im L*a*b*-Farbraum, d.h. für jeden Farbinformationswert, z.B. jeden Farbton, z.B. jeden Farbton des L*a*b*-Farbraums kann bestimmt werden, wie viele Bildpunkte in dem digitalen Bild, in welchem unter anderem das gefärbte Haar des Models abgebildet ist, den jeweiligen Farbinformationswert, z.B. den jeweiligen Farbton, z.B. den jeweiligen Farbton des L*a*b*-Farbraums, aufweisen.

Die Mehrzahl der Häufigkeitsverteilungen der Haarfarbinformation bildet in verschiedenen Ausführungsbeispielen die Haarfarben-Statistik, beispielsweise die Haarfarben-Statistik für die durch Färben erzielbaren Haarfarben.

In verschiedenen Ausführungsbeispielen wird die Farbinformation, beispielsweise der Farbton, auch in einem Ausgabe- bzw. Anzeigemedium im mediumunabhängigen Farbraum, z.B. dem L*a*b*-Farbraum parametrisiert. Dadurch kann es ermöglicht werden, dass beispielsweise das wie oben beschrieben ermittelte zu erwartende Färbeergebnis, welches beispielsweise an einem Bildschirm angezeigt oder ausgedruckt werden kann, im Wesentlichen oder vollständig als dieselbe Farbe bzw. Farbverteilung erscheint wie bei dem gefärbten Haar des Models, wenn man es direkt betrachten würde, bzw. bei dem digitalen Bild des Models, wenn man es auf einem Bildschirm darstellen oder ausdrucken würde, beispielsweise auf einer Verpackung des Färbemittels. Damit kann vermieden werden, dass allein schon wegen unterschiedlicher Darstellungs- bzw. Erfassungsmedien eine Farbverzerrung auftritt, welche dazu führen könnte, dass ein Färbeergebnis beim Nutzer eine andere Farbe aufzuweisen scheint als z.B. anhand der Verpackung des Färbemittels oder einer Präsentation einer computergestützten Haarfarbberatung zu erwarten gewesen wäre.

In verschiedenen Ausführungsbeispielen, beispielsweise wenn die ähnlichste Haarfarbinformations-Häufigkeitsverteilung aus der Statistik der durch Färben erzielbarer Haarfarben ermittelt ist, wird die ähnlichste Haarfarbinformations-Häufigkeitsverteilung dazu genutzt, für das Haar, das auf dem digitalen Bild abgebildet ist, bzw. für die Haarfarbe des Haars, ein Färbemittel zu bestimmen, welches ein ähnlichstes Färbeergebnis zu der abgebildeten Haarfarbe ermöglicht.

Auf im Wesentlichen jedem Bild, auf welchem Haar zu sehen ist, kann auch Haut zu sehen sein, beispielsweise Gesichtshaut der Person, zu der das Haar gehört. Für das Ermitteln des Haarbereichs ist es darum vorteilhaft, sein, eine Statistik häufiger Hautfarben (auch als Hautfarben-Statistik bezeichnet) zur Verfügung zu haben. Die Statistik häufiger Hautfarben weist für eine Mehrzahl von beim Menschen häufig vorkommenden Hautfarben jeweils zumindest eine Häufigkeitsverteilung mindestens einer Hautfarbinformation auf.

Die Hautfarben-Statistik wird im Wesentlichen analog zur Haarfarben-Statistik, z.B. der Haarfarben-Statistik häufiger Haarfarben, erzeugt, indem jeweils mindestens ein digitales Bild von einer Mehrzahl von Personen erzeugt wird, wobei auf jedem der digitalen Bilder Haut, z.B. Gesichtshaut, der jeweils abgebildeten Person zu sehen ist, und wobei jede der Personen eine häufige Hautfarbe hat, wobei eine Gesamtheit der häufigen Hautfarben beispielsweise mehr als 70% der beim Menschen auftretenden Hautfarben aufweist, z.B. mehr als 80%, z.B. mehr als 90%, z.B. mehr als 95%. Die häufigen Hautfarben beziehen sich auf die im vorgesehenen regionalen Anwendungsgebiet des Verfahrens häufigen Hautfarben. Anhand der Mehrzahl digitaler Bilder, welche jeweils eine Hautfarbe der häufigen Hautfarben abbilden, wird für jede Hautfarbe der Mehrzahl häufiger Hautfarben eine Hautfarbinformations-Häufigkeitsverteilung ermittelt. In verschiedenen Ausführungsbeispielen wird die Hautfarbinformation in einem mediumunabhängigen Farbraum parametrisiert, beispielsweise im L*a*b*-Farbraum.

Anhand der Hautfarben-Statistik wird mittels Vergleichens mit der Bildfarbinformations-Häufigkeitsverteilung eine ähnlichste Hautfarbinformations-Häufigkeitsverteilung ermittelt, wobei die ähnlichste Hautfarbinformations-Häufigkeitsverteilung diejenige Häufigkeitsverteilung aus der Mehrzahl von Hautfarbinformations-Häufigkeitsverteilungen ist, die der Bildfarbinformations-Häufigkeitsverteilung am ähnlichsten ist. Die Hautfarbinformations-Häufigkeitsverteilungen können, wie oben für die Haarfarbinformations-Häufigkeitsverteilungen beschrieben, normiert sein.

Die ähnlichste Hautfarbinformations-Häufigkeitsverteilung wird in verschiedenen Ausführungsbeispielen genutzt, um eine Hautbereichfläche, welche auch als Hautbereich bezeichnet werden kann, zu ermitteln. Analog zu dem, was oben für das Ermitteln des Haarbereichs beschrieben ist, werden diejenigen Bildpunkte des digitalen Bildes, welche eine Bildfarbinformation aufweisen, welche einer Hautfarbinformation in der ähnlichsten Hautfarbinformations-Häufigkeitsverteilung entspricht, beispielsweise dieser gleich ist, dem Hautbereich zugeordnet. Der Hautbereich und der Haarbereich sind in verschiedenen Ausführungsbeispielen getrennte Bereiche. Anders ausgedrückt kann ein Bildpunkt nicht gleichzeitig dem Haarbereich und dem Hautbereich zugeordnet werden.

In verschiedenen Ausführungsbeispielen wird vom Nutzer vor dem Ermitteln der

Bildfarbinformations-Häufigkeitsverteilung und/oder vor dem Ermitteln der Haarfarbinformations-Häufigkeitsverteilung (allgemein als Farbinformations-Häufigkeitsverteilung bezeichnet) ein Teilbereich bestimmt, welcher für das Ermitteln der Farbinformations-Häufigkeitsverteilung herangezogen werden soll. Dies wird dazu genutzt, eine Häufigkeit von Bildpunkten, die kein Haar darstellen, im zum Ermitteln der Farbinformations-Häufigkeitsverteilung herangezogenen Bereich der Bildfläche zu senken.

Der Teilbereich wird vom Nutzer beispielsweise auf einer Darstellung des digitalen Bilds, beispielsweise auf einem Monitor, markiert, beispielsweise durch Einkreisen (in dem Fall der eingekreiste Bereich der Teilbereich sein) oder durch Antippen eines Punktes, wobei der Teilbereich beispielsweise durch einen Radius um den angetippten Punkt bestimmt sein kann.

Das Bestimmen des Teilbereichs und das Ermitteln und Darstellen des Haarbereichs kann iterativ ausgeführt sein. Anders ausgedrückt kann der Nutzer einen Teilbereich bestimmen, und der Haarbereich kann beispielsweise wie oben beschrieben bestimmt und neu eingefärbt werden. In einem Fall, in dem das Ergebnis nicht zufrieden stellend ist, kann, beispielsweise im Fall einer Mindererkennung, ein weiterer Teilbereich vom Nutzer bestimmt werden, und der Haarbereich kann anhand der beiden bestimmten Teilbereiche ermittelt und neu eingefärbt werden. Im Fall einer Übererkennung kann der Nutzer bestimmen, dass eine nachfolgende Markierung eine De-Selektion ausführen soll, anders ausgedrückt, dass die nachfolgende Markierung einen Teilbereich, auch als De-Selektionsbereich bezeichnet, markiert, welcher kein Haar abbildet. In dem Fall kann beim nachfolgenden Ermitteln des Haarbereichs nur der erste bestimmte Teilbereich für das Ermitteln des Haarbereichs dazu herangezogen werden, Bildpunkte als zum Haarbereich gehörig zu ermitteln. Im De-Selektionsbereich kann eine Farbinformations-Häufigkeitsverteilung ermittelt werden, welche dazu genutzt werden kann, aus der wie oben beschrieben ermittelten ähnlichsten Farbinformations-Häufigkeitsverteilung solche Farbinformationen, beispielsweise Farbtöne, zu entfernen, welche keine Haare darstellen.

In verschiedenen Ausführungsbeispielen wird das digitale Bild vor dem Ermitteln der Bildfarbinformations-Häufigkeitsverteilung daraufhin untersucht, ob eine Korrektur des Bildes vorteilhaft wäre, und das digitale Bild kann, wenn die Untersuchung ergibt, dass die Korrektur vorteilhaft wäre, korrigiert werden.

Eine vorläufige Bildfarbeninformations-Häufigkeitsverteilung kann erstellt werden. Diese kann im Wesentlichen genauso erstellt werden wie die Bildfarbeninformations-Häufigkeitsverteilung. Die vorläufige Bildfarbeninformations-Häufigkeitsverteilung kann typischerweise auf dem gesamten Bild erstellt werden.

Ein Ermitteln einer Notwendigkeit einer Korrektur und eine gegebenenfalls durchgeführte Korrektur können im Wesentlichen herkömmliche Verfahren zu einer Bildoptimierung anwenden. Beispielsweise kann die vorläufigen Bildfarbeninformations-Häufigkeitsverteilung Helligkeits- und Farbinformationen aufweisen. Anhand dessen können hellste Flächenbereiche, d.h. hellste, z.B. zusammenhängende, Bildpunkte ermittelt werden. Typischerweise sollten die hellsten Flächenbereiche, beispielsweise in einem Bild, welches einen Kopf einer Person darstellt, weiß oder beinahe weiß sein, beispielsweise Weißes im Auge, Reflexe auf einer Pupille, usw. Der hellste Flächenbereich kann bzw. die hellsten Flächenbereiche können als weiß oder beinahe weiß beurteilt werden, wenn jeder ihrer Farb- bzw. Helligkeitswerte im jeweiligen Farbraum, in welchem sie parametrisiert sind, um maximal 10% des jeweiligen Maximalwerts des Parameters von dem Weißwert (also dem Wert, der der jeweilige Parameter für reines Weiß annimmt) des Parameters abweicht, beispielsweise um maximal 5%, beispielsweise um maximal 2%. Bei einer beispielhaften Parametrisierung im L*a*b*-Farbraum und einer maximal tolerierten Abweichung von Weiß (L*=100, a*=0, b*=0) von 10% müsste beispielsweise L* im Bereich von 90 bis 100 liegen, a* im Bereich von -15 bis +10, und b* im Bereich von -10 bis +15.

Ein deutliches Abweichen von Weiß (also ein Überschreiten der maximal tolerierten Abweichung von Weiß bei mindestens einem der Parameter) bei den hellsten Flächenbereichen im Bild kann ein Hinweis auf einen Farbstich oder einen Grauschleier im Bild sein, beispielsweise kann ein Farbton jedes Bildpunkts mit einem, beispielsweise für alle Bildpunkte gleichen, zusätzlichen Farbton überlagert sein. Dieser Farbstich kann korrigiert werden, beispielsweise indem der zusätzliche Farbton bei allen Bildpunkten rechnerisch entfernt wird. Dabei kann die Korrektur beispielsweise derart vorgenommen werden, dass für die hellsten Flächenbereiche im Bild alle Parameter der Farb- bzw. Farb-Helligkeits-Parametrisierung der Bildpunkte exakt dem Weißwert entspricht (beispielsweise L*=100, a*=0, b*=0 bei einer Parametrisierung im L*a*b*-Farbraum), oder so, dass die Parameter innerhalb des Bereiches liegen, der, wie oben beschrieben, als beinahe weiß beurteilt wird.

Die vorläufige Bildfarbeninformations-Häufigkeitsverteilung kann hinsichtlich einer Helligkeitsverteilung analysiert werden. Bilder, welche eine gute Farb- und Strukturerkennung ermöglichen, können typischerweise eine breite Helligkeitsverteilung aufweisen. In einem Fall, dass die vorläufige Bildfarbeninformations-Häufigkeitsverteilung nur einen schmalen Helligkeitsbereich aufweist, kann der Helligkeitsbereich rechnerisch gestreckt werden.

Ferner kann eine Farbsättigung rechnerisch geändert werden, beispielsweise in einem Fall, in welchem das Bild visuell oder anhand statistischer Untersuchungen an der vorläufigen Bildfarbeninformations-Häufigkeitsverteilung zu farbintensiv oder zu wenig farbintensiv erscheint.

Wenn eine Korrektur am digitalen Bild durchgeführt wird, kann das korrigierte Bild als Grundlage für das weitere Verfahren genutzt werden, beispielsweise für das Ermitteln der Bildfarbeninformations-Häufigkeitsverteilung.

In verschiedenen Ausführungsbeispielen wird im digitalen Bild ein schattiger Haarbereich ermittelt. Der schattige Haarbereich, welcher auch als schattige Haarbereichfläche bezeichnet werden kann, weist einen Flächenbereich im Haarbereich auf, in welchem das Haar im Schatten liegt. Anders ausgedrückt kann die schattige Haarbereichfläche eine zusammenhängende oder aus einer Mehrzahl von Einzelflächen bestehende Fläche aufweisen, in welcher das Haar wegen einer Beschattung dunkler erscheint als ein anderer Teil des Haars.

In verschiedenen Ausführungsbeispielen wird die schattige Haarbereichfläche ermittelt, indem anhand einer Helligkeitsinformation in der Bildfarbinformations-Häufigkeitsverteilung, d.h. einer Helligkeitsverteilung, für die Bildpunkte die dem Haarbereich zugeordnet sind, eine Mehrzahl von Bildpunkten mit sehr geringer Helligkeit ermittelt und als der schattigen Haarbereichfläche zugehörig bestimmt werden. Beispielsweise können 20% der Bildpunkte oder weniger, welche die geringste Helligkeit in der Helligkeitsverteilung der Bildpunkte aufweisen, als Bildpunkte mit sehr geringer Helligkeit ermittelt werden, beispielsweise 10% der Bildpunkte mit der geringsten Helligkeit, beispielsweise 5% der Bildpunkte mit der geringsten Helligkeit, beispielsweise mindestens ein Bildpunkt mit der geringsten Helligkeit.

In verschiedenen Ausführungsbeispielen wird im digitalen Bild ein erhellter Haarbereich ermittelt. Der erhellte Haarbereich, welcher auch als erhellte Haarbereichfläche bezeichnet werden kann, weist einen Flächenbereich im Haarbereich auf, in welchem das Haar von einer Lichtquelle stärker beleuchtet erscheint als in anderen Haarbereichen. Anders ausgedrückt kann die erhellte Haarbereichfläche eine zusammenhängende oder aus einer Mehrzahl von Einzelflächen bestehende Fläche aufweisen, in welcher das Haar wegen einer Beleuchtung heller erscheint als ein anderer Teil des Haars.

In verschiedenen Ausführungsbeispielen wird die erhellte Haarbereichfläche ermittelt, indem anhand einer Helligkeitsinformation in der Bildfarbinformations-Häufigkeitsverteilung, d.h. einer Helligkeitsverteilung, für die Bildpunkte die dem Haarbereich zugeordnet sind, eine Mehrzahl von Bildpunkten mit sehr hoher Helligkeit ermittelt und als der erhellten Haarbereichfläche zugehörig bestimmt werden. Beispielsweise können 20% der Bildpunkte oder weniger, welche die höchste Helligkeit in der Helligkeitsverteilung der Bildpunkte aufweisen, als Bildpunkte mit sehr hoher Helligkeit ermittelt werden, beispielsweise 10% der Bildpunkte mit der höchsten Helligkeit, beispielsweise 5% der Bildpunkte mit der höchsten Helligkeit, beispielsweise mindestens ein Bildpunkt mit der höchsten Helligkeit.

In verschiedenen Ausführungsbeispielen werden die schattige Haarbereichfläche und die erhellte Haarbereichfläche genutzt, um eine Schatten-Licht-Maske zu erzeugen. Für die Haarbereichfläche kann anhand der Helligkeitsverteilung eine mittleren Helligkeit ermittelt werden, wobei die mittlere Helligkeit in der Haarbereichfläche einem statistischen Mittelwert der Helligkeiten der Mehrzahl von Bildpunkten in der Haarbereichfläche entsprechen kann, beispielsweise einem arithmetischen Mittel oder einem Median.

In verschiedenen Ausführungsbeispielen wird jeweils für den mindestens einen Bildpunkt, beispielsweise die Mehrzahl von Bildpunkten, in der schattigen Haarbereichfläche und den mindestens einen Bildpunkt, beispielsweise die Mehrzahl von Bildpunkten, in der erhellten Haarbereichfläche ein Helligkeitsdifferenzwert zwischen der Helligkeit des mindestens einen Bildpunkts und der mittleren Helligkeit in der Haarbereichfläche ermittelt.

Die Helligkeitsdifferenzwerte können auf eine solche Weise zweidimensional angeordnet werden, dass sich eine Schatten-Licht-Maske ergibt, in welcher die Helligkeitsdifferenzwerte, welche dem jeweils mindestens einen Bildpunkt der erhellten Haarbereichfläche bzw. dem mindestens einen Bildpunkt der schattigen Haarbereichfläche zugeordnet sind an den räumlichen Positionen angeordnet sind, die dem mindestens einen Bildpunkt der erhellten Haarbereichfläche bzw. dem mindestens einen Bildpunkt der schattigen Haarbereichfläche entsprechen. Anders ausgedrückt kann aus der Mehrzahl der Helligkeitsdifferenzwerte die Schatten-Licht-Maske zusammengestellt werden.

Die Schatten-Licht-Maske kann nach einem neu Einfärben des Haarbereichs dem neu eingefärbten Haarbereich überlagert werden. Anders ausgedrückt kann der neu eingefärbte Haarbereich nachträglich mit den mittels der Schatten-Licht-Maske überlagerbaren erhellten und schattigen Bereichen versehen werden, so dass ein ursprünglicher Beleuchtungseindruck des Haars wiederhergestellt wird. Damit kann der natürliche Eindruck des neu eingefärbten Haars weiter verbessert werden.

Beim Ermitteln der Haarbereichfläche kann zusätzlich zur Farbinformation eine strukturelle Information herangezogen werden.

Beispielsweise kann die Bildfarbinformations-Häufigkeitsverteilung unter Hinzuziehung einer räumlichen Anordnung der Bildpunkte, deren Bildfarbinformationen in der Bildfarbinformations-Häufigkeitsverteilung erfasst sind, analysiert werden. Dafür können im Wesentlichen bekannte Verfahren zur Verknüpfung von Farb- und Strukturinformation genutzt werden. Beispielsweise kann ein Bereich, welcher eine Farbinformation aufweist, die ähnlich einer Farbinformation eines dem Haarbereich zugeordneten Bildpunkts ist, und der beispielsweise von dem Haarbereich zugeordneten Bildpunkten räumlich an diese angrenzend umgeben oder teilweise umgeben ist, als dem Haarbereich zugehörig erkannt und diesem zugeordnet werden. In einem anderen Beispiel kann ein Bereich, welcher eine Farbinformation aufweist, die ähnlich einer Farbinformation eines dem Haarbereich zugeordneten Bildpunkts ist, und an den beispielsweise in zwei einander ungefähr entgegengesetzten Richtungen dem Haarbereich zugeordneten Bildpunkten räumlich angrenzen, als Teil einer linearen Struktur des Haarbereichs, beispielsweise einer Haarsträhne, erkannt und dem Haarbereich zugeordnet werden.

Beim Ermitteln der Haarbereichfläche kann zusätzlich zur Farbinformation und ggf. zur strukturellen Information eine Positionsinformation herangezogen werden.

Beispielsweise kann die oben beschriebene Analyse der Bildfarbinformations-Häufigkeitsverteilung unter Hinzuziehung der räumlichen Anordnung der Bildpunkte dazu genutzt werden, um Bildpunkte zu ermitteln, welche eine Farbinformation aufweisen, die ähnlich oder gleich einer Farbinformation eines dem Haarbereich zugeordneten Bildpunkts ist, aber keine räumliche Verbindung zum Haarbereich aufweist, beispielsweise zum Haarbereich, welcher den vom Nutzer markierten Teilbereich aufweist. Die auf diese Weise ermittelten Bildpunkte können als nicht zum Haarbereich gehörig bestimmt werden. Dementsprechend können diese Bildpunkte bei einer weiteren Bearbeitung der Bildpunkte, die dem Haarbereich zugeordnet sind, unberücksichtigt bleiben.

In verschiedenen Ausführungsbeispielen weist ein Verfahren zur computergestützten Haarfarbberatung ein Ermitteln einer Haarbereichfläche, in welcher Haare abgebildet sind, in einem digitalen Bild einer Person, auf welchem eine Vielzahl von Haaren zu sehen sind, auf. Das Ermitteln der Haarbereichfläche weist ein Ermitteln einer Bildfarbinformations-Häufigkeitsverteilung, welche einer Häufigkeitsverteilung mindestens einer Farbinformation für eine Mehrzahl von Bildpunkten in dem digitalen Bild entsprechen kann, auf, sowie ein Vergleichen der Bildfarbinformations-Häufigkeitsverteilung mit einer Haarfarben-Statistik, wobei die Haarfarben-Statistik für eine Mehrzahl von Haarfarben jeweils zumindest eine Häufigkeitsverteilung mindestens einer Haarfarbinformation aufweist.

In einer Ausgestaltung ist die Haarfarben-Statistik eine Statistik häufiger Haarfarben. und die Mehrzahl von Haarfarben eine Mehrzahl von beim Menschen häufig vorkommenden Haarfarben.

In einer Ausgestaltung ist die Haarfarben-Statistik eine Statistik durch Färben erzielbarer Haarfarben, und die Mehrzahl von Haarfarben eine Mehrzahl von mittels Färbens erzielbaren Haarfarben.

In einer Ausgestaltung weist das Verfahren ferner ein Ermitteln einer ähnlichsten Haarfarbinformations-Häufigkeitsverteilung aus der Haarfarben-Statistik auf, wobei die ähnlichste Haarfarbinformations-Häufigkeitsverteilung diejenige Häufigkeitsverteilung aus der Mehrzahl von Haarfarbinformations-Häufigkeitsverteilungen ist, die der Bildfarbinformations-Häufigkeitsverteilung am ähnlichsten ist.

In einer Ausgestaltung weist das Verfahren ferner ein Zuordnen einer Mehrzahl von Bildpunkten in dem Bild, deren jeweilige mindestens eine Farbinformation mindestens einer Farbinformation in der ähnlichsten Haarfarbinformations-Häufigkeitsverteilung entspricht, zur Haarbereichfläche auf.

In einer Ausgestaltung weist das Verfahren ferner ein Vergleichen der Bildfarbinformations-Häufigkeitsverteilung mit einer Hautfarben-Statistik auf, wobei die Hautfarben-Statistik für eine Mehrzahl von beim Menschen häufig vorkommenden Hautfarben jeweils zumindest eine Häufigkeitsverteilung mindestens einer Hautfarbinformation aufweist, sowie ein Ermitteln einer ähnlichsten Hautfarbinformations-Häufigkeitsverteilung aus der Hautfarben-Statistik, wobei die ähnlichste Hautfarbinformations-Häufigkeitsverteilung diejenige Häufigkeitsverteilung aus der Mehrzahl von Hautfarbinformations-Häufigkeitsverteilungen ist, die der Bildfarbinformations-Häufigkeitsverteilung am ähnlichsten ist.

In einer Ausgestaltung weist das Verfahren ferner ein Zuordnen mindestens eines Bildpunkts in dem digitalen Bild, dessen mindestens eine Farbinformation mindestens einer Farbinformation in den Hautfarbinformationen der ähnlichsten Hautfarbinformations-Häufigkeitsverteilung entsprechen kann, zu einer Hautbereichfläche auf, wobei die Hautbereichfläche von der Haarbereichfläche verschieden sein kann.

In einer Ausgestaltung weist das Verfahren ferner ein Ermitteln einer ist auf, wobei mindestens ein Bildpunkt, der der Haarbereichfläche zugeordnet sein kann und dessen Helligkeit nahe oder bei einer minimalen Helligkeit der Mehrzahl von Bildpunkten in der Haarbereichfläche liegt, der schattigen Haarbereichfläche zugeordnet wird.

In einer Ausgestaltung weist das Verfahren ferner ein Ermitteln einer erhellten Haarbereichfläche auf, wobei mindestens ein Bildpunkt, der der Haarbereichfläche zugeordnet ist und dessen Helligkeit nahe oder bei einer maximalen Helligkeit der Mehrzahl von Bildpunkten in der Haarbereichfläche liegt, der erhellten Haarbereichfläche zugeordnet werden. In einer Ausgestaltung weist das Verfahren ferner ein Erzeugen einer Schatten-Licht-Maske auf, Das Erzeugen der Schatten-Licht-Maske kann ein Ermitteln einer mittleren Helligkeit in der Haarbereichfläche aufweisen, wobei die mittlere Helligkeit in der Haarbereichfläche einem statistischen Mittelwert der Helligkeiten der Mehrzahl von Bildpunkten in der Haarbereichfläche entsprechen kann, sowie für den jeweils mindestens einen Bildpunkt in der schattigen Haarbereichfläche und in der erhellten Haarbereichfläche ein Ermitteln eines Helligkeitsdifferenzwerts zwischen der Helligkeit des mindestens einen Bildpunkts und der mittleren Helligkeit in der Haarbereichfläche, und ein Zusammenstellen der Helligkeitsdifferenzwerte zur Schatten-Licht-Maske.

In einer Ausgestaltung weist das Verfahren ferner ein Festlegen eines Teilbereichs innerhalb des digitalen Bildes durch einen Nutzer auf. In einer Ausgestaltung weist das Festlegen des Teilbereichs durch den Nutzer ein Markieren des Teilbereichs auf dem auf einem Bildschirm dargestellten Bild der Person auf.

In einer Ausgestaltung wird für das Ermitteln der Bildfarbinformations-Häufigkeitsverteilung die Häufigkeitsverteilung im Teilbereich ermittelt.

Das der Haarbereichfläche kann ferner ein Einbeziehen einer in dem Bild der Person erkannten räumlichen Struktur aufweisen.

Das Verfahren kann vor dem Ermitteln der Haarbereichfläche ferner ein

Erstellen einer Statistik von Farbinformationen und/oder Helligkeitsinformationen der Mehrzahl von Bildpunkten in dem gesamten Bild aufweisen, sowie ein Ermitteln einer Notwendigkeit für eine Bildkorrektur und ein Durchführen einer Bildkorrektur, wenn das Ermitteln der Notwendigkeit einer Bildkorrektur ergibt, dass eine Bildkorrektur durchgeführt werden sollte.

Die Biildkorrektur kann eine Helligkeitskorrektur und/oder eine Farbkorrektur aufweisen.

Das Verfahren kann ferner ein Auswählen einer erzielbaren Haarfarbe aus der Mehrzahl mittels Färbens erzielbarer Haarfarben durch den Nutzer aufweisen, sowie ein Neueinfärben der Mehrzahl von Bildpunkten in der Haarbereichfläche entsprechend einer Mehrzahl neuer Farbinformationen, wobei jedem Bildpunkt der Mehrzahl von Bildpunkten in der Haarbereichfläche eine neue Farbinformation zugeordnet sein kann und wobei die Mehrzahl neuer Farbinformationen so gewählt sein kann, dass ihre Häufigkeitsverteilung der Haarfarbinformations-Häufigkeitsverteilung für die ausgewählte erzielbare Haarfarbe entsprechen kann.

Das Verfahren kann ferner ein Überlagern der neu eingefärbten Haarbereichfläche mit der Schatten-Licht-Maske aufweisen, wobei das Überlagern der Haarbereichfläche mit der Schatten-Licht-Maske ein Erhellen mindestens eines Bildpunkts innerhalb der erhellten Haarbereichfläche um den diesem Bildpunkt zugeordneten Helligkeitsdifferenzwert und ein Abdunkeln mindestens eines Bildpunkts innerhalb der schattigen Haarbereichfläche um den diesem Bildpunkt zugeordneten Helligkeitsdifferenzwert entsprechen kann.

In einer Ausgestaltung ist die Farbinformation eine Information bezüglich eines Farbtons

In einer Ausgestaltung ist der Farbton in einem medienunabhängigen Farbraum parametrisiert.

In einer Ausgestaltung ist der medienunabhängige Farbraum ein L^{*}a^{*}b^{*-}Farbraum

In einer Ausgestaltung weist das Verfahren ferner ein Präsentieren mindestens eines Färbemittels auf, welches der ähnlichsten Haarfarbinformations-Häufigkeitsverteilung zugeordnet ist.

Das Färbemittel kann ein Färbeprodukt aus einer Produktpalette sein.

Das Färbemittel kann beispielsweise ein Färbeprodukt aus einer Schwarzkopf-Produktpalette sein.

In verschiedenen Ausführungsbeispielen wird eine Datenverarbeitungsvorrichtung zum Ausführen einer computergestützten Haarfarbberatung bereitgestellt Die Datenverarbeitungsvorrichtung weist einen Prozessor auf, wobei der Prozessor eingerichtet ist, in einem digitalen Bild einer Person, auf welchem Haare zu sehen sind, eine Haarbereichfläche zu ermitteln, in welcher Haare abgebildet sind, wobei das Ermitteln der Haarbereichfläche ein Ermitteln einer Bildfarbinformations-Häufigkeitsverteilung aufweist, welche einer Häufigkeitsverteilung mindestens einer Farbinformation für eine Mehrzahl von

Bildpunkten in dem digitalen Bild entspricht. Prozessor ist ferner eingerichtet zu einem Vergleichen der Bildfarbinformations-Häufigkeitsverteilung mit einer Haarfarben-Statistik, wobei die Haarfarben-Statistik für eine Mehrzahl von Haarfarben jeweils zumindest eine Häufigkeitsverteilung mindestens einer Haarfarbinformation aufweist.

Ausführungsbeispiele der Erfindung sind in den Figuren dargestellt und werden im Folgenden näher erläutert.

Es zeigen
Figur 1 eine graphische Darstellung eines digitalen Bildes einer Person, auf welchem eine Vielzahl von Haaren zu sehen ist;
Figur 2 graphische Darstellungen von zwei verschiedenen Haarfarbinformations-Häufigkeitsverteilungen zur Verwendung im Verfahren zur computergestützten Haarfarbberatung gemäß verschiedenen Ausführungsbeispielen;
Figur 3 eine graphische Darstellung einer Bildfarbinformations-Häufigkeitsverteilung zusammen mit zwei verschiedenen Haarfarbinformations-Häufigkeitsverteilungen zur Verwendung im Verfahren zur computergestützten Haarfarbberatung gemäß verschiedenen Ausführungsbeispielen;
Figur 4 ein Ablaufdiagramm, welches ein Verfahren zur computergestützten Haarfarbberatung gemäß verschiedenen Ausführungsbeispielen darstellt;
Figur 5 ein Ablaufdiagramm, welches ein Verfahren zur computergestützten Haarfarbberatung gemäß verschiedenen Ausführungsbeispielen darstellt; und
Figur 6 eine graphische Darstellung einer Datenverarbeitungsvorrichtung zum Ausführen einer computergestützten Haarfarbberatung gemäß verschiedenen Ausführungsbeispielen.

In der folgenden ausführlichen Beschreibung wird auf die beigefügten Zeichnungen Bezug genommen, die Teil der vorliegenden Anmeldung bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

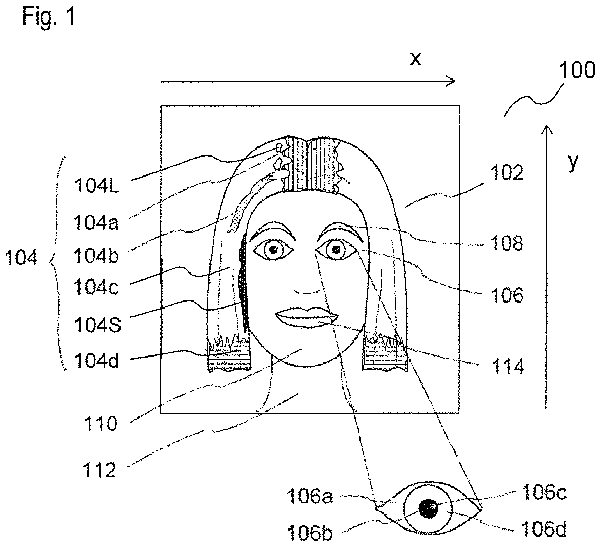

Fig.1 zeigt eine graphische Darstellung 100 eines digitalen Bildes einer Person, auf welchem eine Vielzahl von Haaren 104 zu sehen ist. Eine Gesamtheit der Vielzahl von Haaren kann hierin auch als "das Haar" bezeichnet werden. Das Haar 104 kann in einem Flächenbereich des digitalen Bildes 100 angeordnet sein, welcher als Haarbereich 104 oder Haarbereichfläche 104 bezeichnet werden kann. Da das abgebildete Haar 104 und der Flächenbereich 104, in welchem das dargestellte Haar angeordnet ist, deckungsgleich sind, wird für beide dasselbe Bezugszeichen 104 verwendet.

Das digitale Bild 100 kann von einer oben beschriebenen Art sein, beispielsweise ein Foto einer Digitalkamera o.ä.

Das digitale Bild 100 weist eine Mehrzahl von Bildpunkten (nicht aufgelöst dargestellt) auf, welche beispielsweise als zweidimensionale Fläche von Bildpunkten angeordnet sein können, beispielsweise entlang von Koordinaten x und y. Jedem Bildpunkt kann mindestens eine Farbinformation zugeordnet sein, welche als Wert des Bildpunkts im digitalen Bild 100 dargestellt ist, beispielsweise als Farbe des Bildpunkts. Das soll in Fig.1 anhand von Schraffuren usw. teilweise angedeutet sein, gibt einen Sinn des Werts des Bildpunkts jedoch nur unvollständig wider, da jeder Bildpunkt einer Schraffur streng genommen lediglich einen von zwei Werten (schwarz oder weiß) aufweist. Dennoch sollen beispielsweise schraffierte Bereiche, z.B. die Bereiche 104d, 104a usw. als Flächenbereiche von Bildpunkten verstanden werden, welche eine von nicht oder anders schraffierten Bereichen verschiedene Farb- und/oder Helligkeitsinformation aufweisen.

In verschiedenen Ausführungsbeispielen ist die mindestens eine Farbinformation jedes Bildpunkts wie oben beschrieben eine Parametrisierung der Farbinformation in einem Farbraum aufweisen, beispielsweise in einem L*a*b*, einem RGB oder einem CMYK-Farbraum.

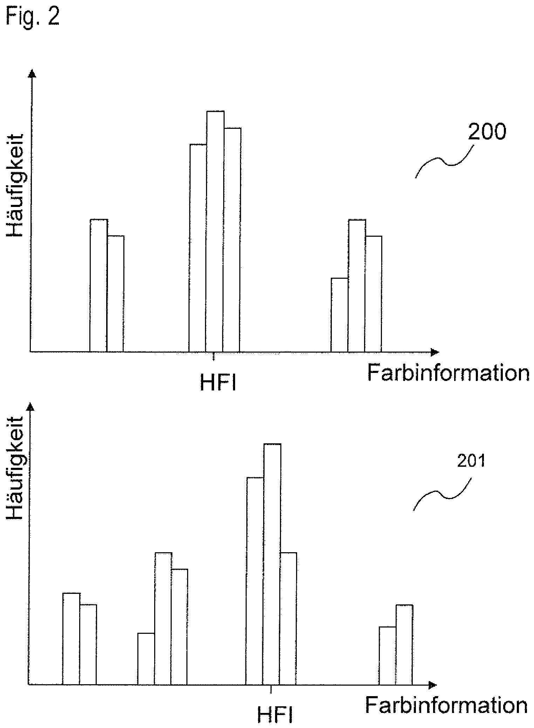

Das Haar 104 kann die Mehrzahl von Bereichen 104a, 104b, 104c, 104d, 104S und 104L aufweisen, welche sich hinsichtlich mindestens einer Farbinformation und/oder hinsichtlich mindestens einer Helligkeitsinformation voneinander unterscheiden können. Beispielsweise kann der Bereich 104c der Bereich sein, in welchem die mindestens eine Farbinformation für einen größten Teil des Haars einheitlich oder im Wesentlichen einheitlich ist, in welchem sich beispielsweise eine Farbinformation nur unwesentlich voneinander unterscheidet, beispielsweise in welchem die Farbinformationen in einem Farbraum einander benachbarte oder nur gering beabstandete Bereiche aufweisen. Der Bereich 104c kann als Bereich mit einer Haupthaarfarbe bezeichnet werden, eine zugehörige Farbinformation als Haupt-Farbinformation HFI (siehe Fig.2). Andere, beispielsweise kleinere, Flächenbereiche 104d, 104a, 104bdes abgebildeten Haars können eine von der Haupthaarfarbe abweichende Haarfarbe, auch als Nebenhaarfarbe bezeichnet, aufweisen. Der mindestens eine (kleinere) Flächenbereich 104d, 104a, 104b kann mindestens einen Bildpunkt aufweisen, wobei der mindestens eine Bildpunkt mindestens eine von der Hauptfarbinformation HFI abweichende Farbinformation, auch als Nebenfarbinformation bezeichnet, aufweisen kann.

Der Haarbereich 104 weist in verschiedenen Ausführungsbeispielen ferner jeweils mindestens einen erhellten Bereich 104L und einen schattigen Bereich 104S auf.

Der erhellte Bereich 104L kann, wie oben beschrieben, eine zusammenhängende Fläche oder eine aus einer Mehrzahl von Einzelflächen bestehende erhellte Fläche 104L sein, in welcher das Haar 104 von Licht erhellt erscheint, beispielsweise heller als andere Bereiche des Haars 104 (z.B. die Bereiche 104a, 104c, 104S, usw.).

Der schattige Bereich 104S kann, wie oben beschrieben, eine zusammenhängende Fläche oder eine aus einer Mehrzahl von Einzelflächen bestehende schattige Fläche 104S sein, in welcher das Haar 104 als in einem Schatten liegend erscheint, beispielsweise dunkler als andere Bereiche des Haars 104 (z.B. die Bereiche 104a, 104c, 104S, usw.).

Abhängig von einer Parametrisierung der mindestens einen Farbinformation der Bildpunkte des digitalen Bildes 100 kann eine Helligkeitsinformation der Bildpunkte von der mindestens einen Farbinformation unabhängig sein (beispielsweise im L*a*b*-Farbraum, welcher die Farbinformation in den Parametern a* und b* parametrisieren kann, und die Helligkeitsinformation in dem Parameter L*) oder abhängig sein (beispielsweise im RGB-Farbraum, in welchem die Helligkeit durch Werte der Farbparameter R, G und B bestimmt sein kann).

Zusätzlich zu dem Haarbereich 104 kann das digitale Bild 100 noch weitere Bereiche aufweisen, beispielsweise einen Augenbrauenbereich 108, einen Hautbereich 110, 112, welcher beispielsweise einen Gesichtshautbereich 110 und einen Halshautbereich 112 aufweisen kann, sowie einen Hintergrundbereich 102, einen Augenbereich 106, welcher einen weißen Augenbereich 106a, einen Irisbereich 106d, einen Pupillenbereich 106b und einen Lichtreflexbereich 106c aufweisen kann.

Ein Verfahren zur computergestützten Haarfarbberatung gemäß verschiedenen Ausführungsbeispielen wird wie oben beschrieben dazu genutzt die Mehrzahl von Bereichen 104a, 104b, 104c, 104d, 104S und 104L (bzw. die in den jeweiligen Bereichen angeordneten Bildpunkte) als zum Haarbereich 104 zugehörig zu erkennen und sie dem Haarbereich 104 zuzuordnen, die anderen Bereiche hingegen, beispielsweise den Hautbereich 110, 112, den Lippenbereich 114, den Hintergrundbereich 102 usw. (bzw. die in den jeweiligen Bereichen angeordneten Bildpunkte) als nicht zum Haarbereich 104 zugehörig zu erkennen und nicht dem Haarbereich zuzuordnen.

Fig.2 zeigt graphische Darstellungen von zwei verschiedenen Haarfarbinformations-Häufigkeitsverteilungen 200 und 201 zur Verwendung im Verfahren zur computergestützten Haarfarbberatung gemäß verschiedenen Ausführungsbeispielen. Die hier dargestellten Beispiele dienen lediglich einer Veranschaulichung der Verwendung der Haarfarbinformations-Häufigkeitsverteilungen.

Wie oben für verschiedene Ausführungsbeispiele beschrieben ist, wird eine Haarfarbenstatistik, welche eine Mehrzahl von Haarfarbinformations-Häufigkeitsverteilungen 200, 201 aufweist, genutzt, um einen Haarbereich in einem digitalen Bild, beispielsweise den Haarbereich 104 in dem in Fig.1 dargestellten digitalen Bild 100, zu ermitteln.

In Fig.2 sind zwei verschiedene Beispiele 200 und 201 für eine Haarfarbinformations-Häufigkeitsverteilung dargestellt. Für ein Ermitteln der Haarfarbinformations-Häufigkeitsverteilungen 200, 201 können zwei verschiedene digitale Bilder genutzt worden sein, auf welchen jeweils Haar mit voneinander verschiedenen Haarfarben dargestellt sein kann. Die digitalen Bilder können beispielsweise zwei verschiedene häufige Haarfarben für die Haarfarbenstatistik häufiger Haarfarben oder zwei verschiedene mittels Färbens erzielbare Haarfarben für die Haarfarbenstatistik mittels Färbens erzielbarer Haarfarben aufweisen, wie oben beschrieben.

In Beispiel 200 ist eine Mehrzahl möglicher Farbinformationen (ein der Farbinformation zugeordneter Wert wird auch als Farbinformationswert bezeichnet) entlang einer horizontalen Achse aufgetragen. Entlang einer vertikalen Achse ist für das digitale Bild, welches zum Ermitteln der Haarfarbinformations-Häufigkeitsverteilung 200 genutzt wurde, eine Häufigkeit aufgetragen, mit welcher die Mehrzahl von Bildpunkten in dem digitalen Bild die jeweilige entlang der horizontalen Achse aufgetragene Farbinformation aufweist. Wie in der Haarfarbinformations-Häufigkeitsverteilungen 200 ersichtlich ist, brauchen nicht alle Farbinformationswerte in einem digitalen Bild repräsentiert zu sein. Die Haarfarbinformations-Häufigkeitsverteilungen 200 kann eine maximale Häufigkeit bei einem Farbinformationswert HFI aufweisen. Eine räumliche Nähe von Farbinformationswerten auf der Farbinformationsachse kann eine farbliche Ähnlichkeit bedeuten. Dies kann dazu führen, dass die Häufigkeitsverteilung eine Mehrzahl von Bereichen aufweist, in welchen Bildpunkte Farbinformationen aufweisen, welche mehreren nahe beieinanderliegenden Farbinformationen entsprechen. Beispielsweise kann der Bereich um HFI im Beispiel 200 dem Bereich 104c aus Fig.1 entsprechen. Getrennte Anhäufungen von Farbinformationswerten bei den Bildpunkten, welche mit größerem Abstand links und rechts von dem Bereich um HFI dargestellt sind, können beispielsweise den Bereichen 104a bzw. 104b in Fig.1 zugeordnet sein. Der Abstand zwischen den Anhäufungen von Farbinformationswerten bei den Bildpunkten kann dabei so groß sein, dass ein herkömmliches Verfahren anhand der Farbinformation beispielsweise nur den Bereich um HFI als zum Haarbereich gehörig identifizieren würde.

In verschiedenen Ausführungsbeispielen wird jedoch die Haarfarbinformations-Häufigkeitsverteilung 200, zusammen mit mindestens einer weiteren Haarfarbinformations-Häufigkeitsverteilung genutzt, um eine Farbinformations-Häufigkeitsverteilung eines digitalen Bildes, in welchem Haar dargestellt ist, mit der Mehrzahl von Haarfarbinformations-Häufigkeitsverteilungen zu vergleichen, eine ähnlichste Haarfarbinformations-Häufigkeitsverteilung zu ermitteln und dann die Bildpunkte als zum Haarbereich gehörend zu identifizieren und zuzuordnen, die eine Farbinformation aufweisen, welche auch in der ähnlichsten Haarfarbinformations-Häufigkeitsverteilung vorkommt.

Im Beispiel 201 ist eine weitere Haarfarbinformations-Häufigkeitsverteilung 201 dargestellt. Die Achsen usw. entsprechen denjenigen der Haarfarbinformations-Häufigkeitsverteilung 200. Die Haarfarbinformations-Häufigkeitsverteilung 201 unterscheidet sich von der Haarfarbinformations-Häufigkeitsverteilung 200 darin, dass sie für eine andere Haarfarbe erstellt wurde, so dass die Bildpunkte andere Farbinformationen aufweisen können, Häufungen von Farbinformationswerten für andere Farbinformationswerte vorliegen können, die häufigste Farbinformation HFI einer anderen Farbinformation entsprechen kann, und die Abstände zwischen Häufungen andere sein können.

Die Haarfarbinformations-Häufigkeitsverteilungen 200 und 201 können bereits so bereinigt sein, dass Bildpunkte, welche einen Gesichtsbereich, einen Hintergrundbereich usw. abbilden, nicht in der Haarfarbinformations-Häufigkeitsverteilung 200 bzw. 201 repräsentiert sind. Die Haarfarbinformations-Häufigkeitsverteilungen 200 und 201 können als Referenz-Haarfarbinformations-Häufigkeitsverteilungen verstanden werden.

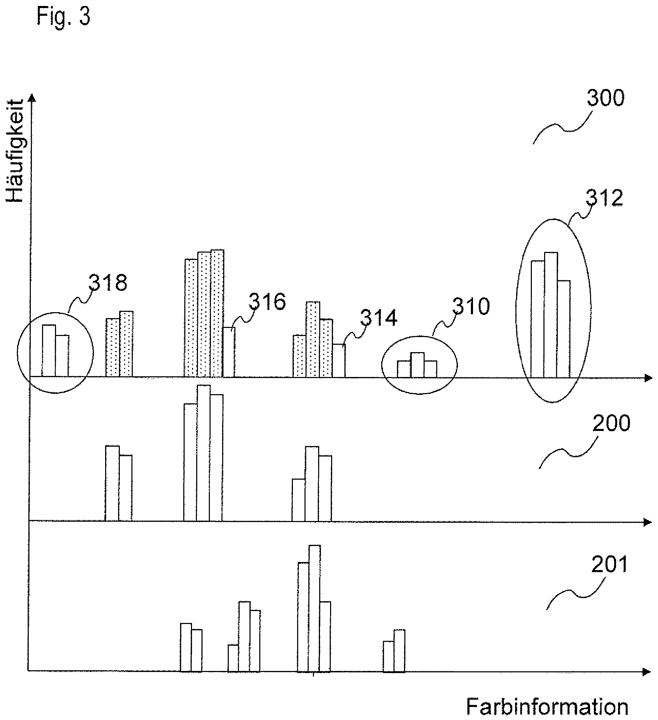

Fig.3 ist eine graphische Darstellung einer Bildfarbinformations-Häufigkeitsverteilung 300 zusammen mit den zwei verschiedenen Haarfarbinformations-Häufigkeitsverteilungen 200 und 201 aus Fig.2 zur Verwendung im Verfahren zur computergestützten Haarfarbberatung gemäß verschiedenen Ausführungsbeispielen.

Die Achsen der Bildfarbinformations-Häufigkeitsverteilung 300 entsprechen den Achsen der Haarfarbinformations-Häufigkeitsverteilungen 200 und 201 In der Bildfarbinformations-Häufigkeitsverteilung 300 können sämtliche Bildpunkte eines digitalen Bildes, beispielsweise eines digitalen Bildes, wie es in Fig. 1 dargestellt ist, repräsentiert sein. Alternativ können nur die Bildpunkte eines vorbestimmten Teilbereichs, beispielsweise eines vom Nutzer wie oben beschrieben vorbestimmten Teilbereichs, in der Bildfarbinformations-Häufigkeitsverteilung 300 mit ihren zugeordneten Farbinformationswerten repräsentiert sein.

Die Haarfarbinformations-Häufigkeitsverteilung 200 wird wie oben beschrieben als die der Bildfarbinformations-Häufigkeitsverteilung 300 ähnlichste Haarfarbinformations-Häufigkeitsverteilung 200 ermittelt Bei einem Zuordnen der Bildpunkte im digitalen Bild, dessen Bildpunkte in der Bildfarbinformations-Häufigkeitsverteilung 300 repräsentiert sind, werden unter Nutzung der ähnlichsten Haarfarbinformations-Häufigkeitsverteilung 200 nur diejenigen Bildpunkte als zum Haarbereich zugehörig zugeordnet, welche eine Farbinformation aufweisen, die mindestens einer Farbinformation der ähnlichsten Haarfarbinformations-Häufigkeitsverteilung 200 entspricht, z.B. gleich ist (in der Bildfarbinformations-Häufigkeitsverteilung 300 sind die entsprechenden Farbinformationsbalken punktiert markiert). Andere Farbinformationsbereiche, z.B. 310, 312 und 318 oder nahe den zum Haarbereich zugehörigen Farbinformationswerten angeordneten Farbinformationsbereiche 314 und 316 werden in verschiedenen Ausführungsbeispielen als nicht zum Haarbereich gehörig bestimmt.

Die Farbinformationsbereiche 310, 312, 314, 316 und 318 können beispielsweise einem Hautbereich, einem Hintergrundbereich, einem Augenbereich usw. wie in Fig.1 dargestellt entsprechen.

Eine Identifikation des Hautbereichs wie oben dargestellt mittels Bestimmens einer der Bildfarbinformations-Häufigkeitsverteilung 300 ähnlichsten Hautfarbinformations-Häufigkeitsverteilung erfolgt ähnlich der in Fig.3 dargestellten Bestimmung des Haarbereichs.

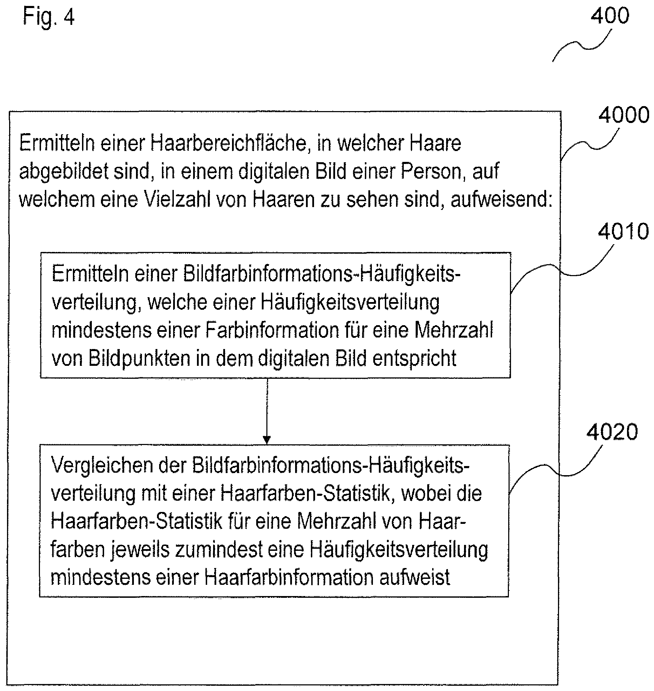

Eine (nicht dargestellte) ähnlichsten Hautfarbinformations-Häufigkeitsverteilung könnte beispielsweise Farbinformationswerte im Wesentlichen nur in einem Farbinformationsbereich aufweisen, der in der Bildfarbinformations-Häufigkeitsverteilung 300 mit 314 gekennzeichnet ist. Fig.4 zeigt ein Ablaufdiagramm 400, welches ein Verfahren zur computergestützten Haarfarbberatung gemäß verschiedenen Ausführungsbeispielen darstellt.

In verschiedenen Ausführungsbeispielen weist ein Verfahren zur computergestützten Haarfarbberatung ein Ermitteln einer Haarbereichfläche, in welcher Haare abgebildet sind, in einem digitalen Bild einer Person, auf welchem eine Vielzahl von Haaren zu sehen sind, auf (in 4000). Das Ermitteln der Haarbereichfläche weist ein Ermitteln einer Bildfarbinformations-Häufigkeitsverteilung, welche einer Häufigkeitsverteilung mindestens einer Farbinformation für eine Mehrzahl von Bildpunkten in dem digitalen Bild entsprechen kann, auf (in 4010), sowie ein Vergleichen der Bildfarbinformations-Häufigkeitsverteilung mit einer Haarfarben-Statistik, wobei die Haarfarben-Statistik für eine Mehrzahl von Haarfarben jeweils zumindest eine Häufigkeitsverteilung mindestens einer Haarfarbinformation aufweist (in 4020).

Das Verfahren kann in verschiedenen Ausführungsbeispielen weitere Prozesse und/oder Merkmale aufweisen, welche oben und im Folgenden beschrieben sind.

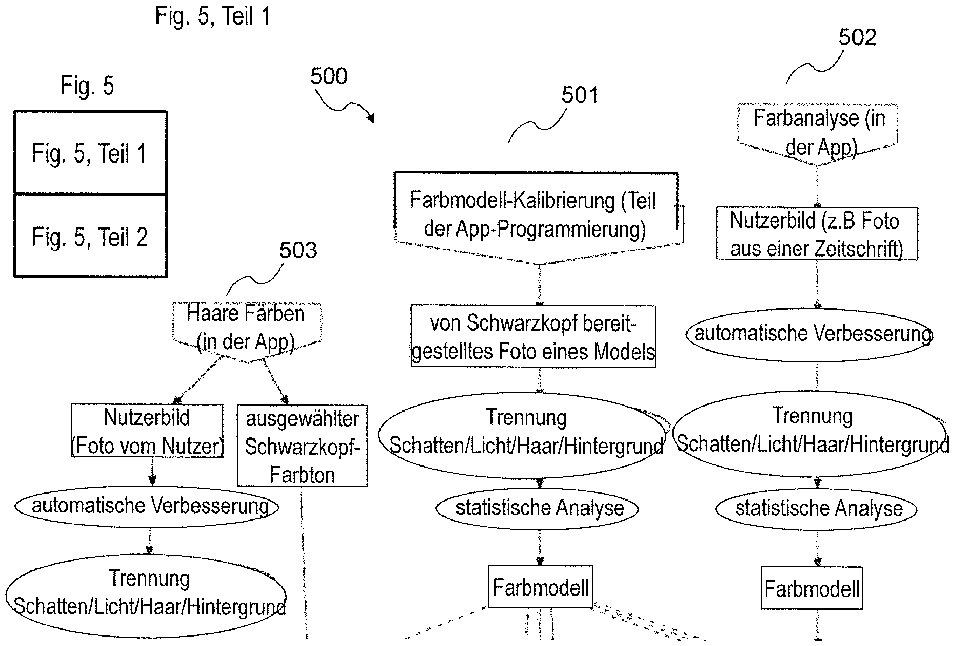

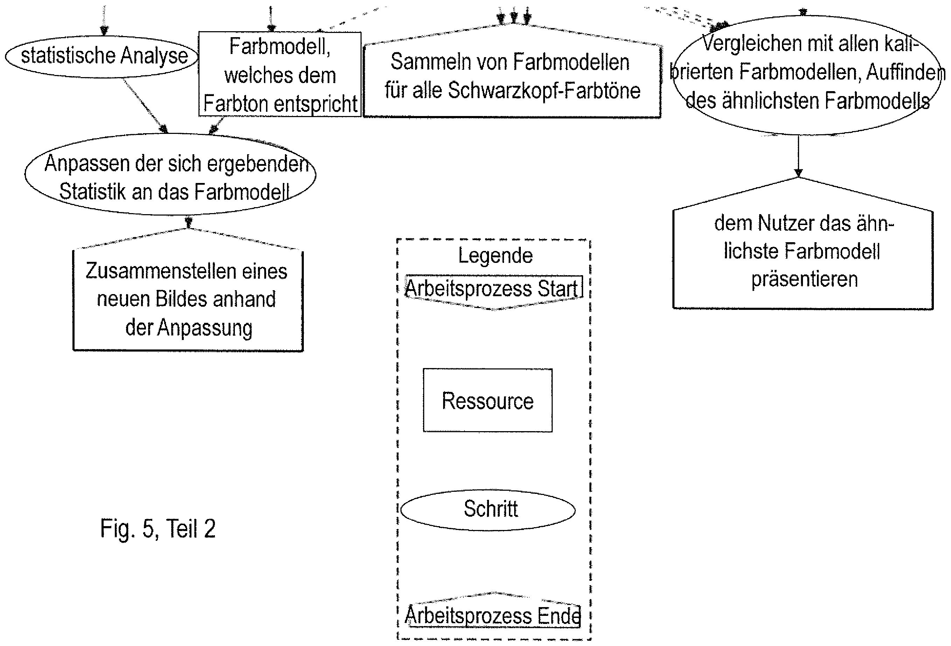

Fig.5 zeigt ein Ablaufdiagramm 500, welches ein Verfahren zur computergestützten Haarfarbberatung gemäß verschiedenen Ausführungsbeispielen darstellt.

Im senkrecht in der Mitte dargestellten Teil 501 des Ablaufdiagramms ist ein Erzeugen einer Haarfarbenstatistik dargestellt, wobei für die die Haarfarbenstatistik für eine Mehrzahl von durch Färben erzielbaren Haarfarben jeweils eine Haarfarbinformations-Häufigkeitsverteilung erzeugt wird.

Dafür kann wie oben beschrieben ein Foto eines Models als digitales Bild bereitgestellt sein. Auf dem Bild kann Haar des Models in einer Haarfarbe gefärbt sein, beispielsweise in einer mittels Färbens, beispielsweise mittels eines Färbeprodukts, beispielsweise mittels eines Schwarzkopf-Färbeprodukts, erzielbaren Haarfarbe.

Für jeden Bildpunkt des digitalen Bildes ist eine Farbinformation bereitgestellt, und aus einer Gesamtheit der Farbinformationen für die Mehrzahl der Bildpunkte wird eine Farbinformations-Häufigkeitsverteilung erstellt. Aus der Farbinformations-Häufigkeitsverteilung können diejenigen Bereiche entfernt werden, die nicht einer typischen Haarfarbinformation für die Haarfarbe entsprechen, beispielsweise Hintergrundbereiche, Hautbereiche, schattige Bereiche oder erhellte Bereiche.

Eine so bereinigte Farbinformations-Häufigkeitsverteilung kann eine Haarfarbinformations-Häufigkeitsverteilung bilden (in Fig.5 als Farbmodell bezeichnet), welche der Haarfarbe, welche auf dem digitalen Bild dargestellt ist, zugeordnet ist. Die Haarfarbinformations-Häufigkeitsverteilung kann beispielsweise dem Färbeprodukt zugeordnet sein (und umgekehrt).

Ein Durchführen des Erstellens der Haarfarbinformations-Häufigkeitsverteilung für eine Mehrzahl von Haarfarben, beispielsweise für eine Mehrzahl von mittels Färbens erzielbaren Haarfarben, bildet die Mehrzahl von Haarfarbinformations-Häufigkeitsverteilungen, welche Teil einer Haarfarbenstatistik für mittels Färbens erzielbare Haarfarben sind.

Analog zum Erzeugen der Haarfarbenstatistik für mittels Färbens erzielbare Haarfarben wird auch, wie auch oben beschrieben, eine Haarfarbenstatistik für eine Mehrzahl häufiger Haarfarben erzeugt, indem anstelle der digitalen Bilder, welche Models mit gefärbtem Haar abbilden, digitale Bilder von Models mit einer häufigen Haarfarbe genutzt werden.

Im rechten vertikalen Teil 502 des Ablaufdiagramms 500 ist ein Verfahren zur computergestützten Haarfarbberatung dargestellt, bei welchem wie oben beschrieben ein bereitgestelltes Bild, auf welchem eine Vielzahl von Haaren zu sehen ist, genutzt wird, um ein Färbeprodukt zu ermitteln, mit welchem die dargestellte Haarfarbe erzielt werden kann. Dafür wird das Bild als digitales Bild bereitgestellt.

Wenn das Bild beispielsweise vom Nutzer als ein Foto aus einer Zeitschrift bereitgestellt wird, kann es zum Digitalisieren z.B. eingescannt werden. Das Bild wird, beispielsweise mittels einer vorläufigen Bildfarbinformations-Häufigkeitsverteilung wie oben beschrieben, daraufhin analysiert, ob eine Bildkorrektur, z.B. eine Bildverbesserung (z.B. bezüglich Helligkeit, Farbstich, Farbsättigung) notwendig ist, und diese ggf. durchgeführt. Anhand des ggf. korrigierten/verbesserten digitalen Bilds wird eine Bildfarbinformations-Häufigkeitsverteilung wie oben beschrieben erstellt. Mittels Vergleichens mit der Mehrzahl von Haarfarbinformations-Häufigkeitsverteilungen wird wie oben beschrieben eine ähnlichste Haarfarbinformations-Häufigkeitsverteilung ermittelt.

In verschiedenen Ausführungsbeispielen wird dem Nutzer die Haarfarbe, welche der ähnlichsten Haarfarbinformations-Häufigkeitsverteilung zugeordnet ist, präsentiert, beispielsweise indem ihm das Bild des Modells, welches zum Erstellen der ähnlichsten Haarfarbinformations-Häufigkeitsverteilung genutzt wurde, präsentiert wird, oder indem ihm eine Packung und/oder eine Rezeptur des Färbeprodukts präsentiert wird, welches genutzt wurde, um die Haarfarbe zu erzielen, welche auf dem Bild dargestellt ist welches zum Erstellen der ähnlichsten Haarfarbinformations-Häufigkeitsverteilung genutzt wurde. Das Präsentieren erfolgt beispielsweise mittels Darstellens auf einem Bildschirm.

Im linken vertikalen Teil 503 des Ablaufdiagramms 500 ist ein Verfahren zur computergestützten Haarfarbberatung dargestellt, bei welchem wie oben beschrieben ein bereitgestelltes Bild des Nutzers, auf welchem eine Vielzahl von Haaren zu sehen ist, genutzt wird, um dem Nutzer einen Eindruck davon zu vermitteln, wie er mit einer neuen Haarfarbe aussehen würde. Zu dem Zweck wird in verschiedenen Ausführungsbeispielen das Bild des Nutzers in digitaler Form bereitgestellt. Das Bild kann wie oben beschrieben ggf. korrigiert, z.B. verbessert werden. Ferner wird in dem digitalen Bild, beispielsweise mittels Vergleichens einer für das digitale Bild oder einen Teilbereich des digitalen Bilds erzeugten Bildfarbinformations-Häufigkeitsverteilung mit einer Haarfarbenstatistik für eine Mehrzahl häufiger Haarfarben wie oben beschrieben, ein Bereich (der Haarbereich) bestimmt in welchem Haar dargestellt ist, das heißt, andere Bereiche wie z.B. ein Hintergrundbereich, ein schattiger Bereich, ein erhellter Bereich usw. werden als getrennt vom Haarbereich betrachtet

Diese können beispielsweise anders weiterbearbeitet werden als der Haarbereich. Beispielsweise kann auf ein neu Einfärben dieser getrennten Bereiche verzichtet werden, oder sie können (wie beispielsweise die schattigen Bereiche oder die erhellten Bereiche) nach dem neu Einfärben dem neu eingefärbten Haarbereich wieder überlagert werden.

Der Nutzer wählt in verschiedenen Ausführungsbeispielen eine gewünschte neue Haarfarbe aus, beispielsweise aus den gemäß dem im Teil 501 dargestellten Verfahren erzeugten Farbmodell oder anhand eines Färbeproduktes, beispielsweise eines Schwarzkopf-Färbeproduktes. Das Farbmodell aus Teil 501, welches der ausgewählten neuen Haarfarbe entspricht, beispielsweise die gewählte Haarfarbinformations-Häufigkeitsverteilung, wird genutzt, um die Bildpunkte des Haarbereichs des digitalen Bildes, welches den Nutzer und sein Haar darstellt, in der neuen Haarfarbe einzufärben.

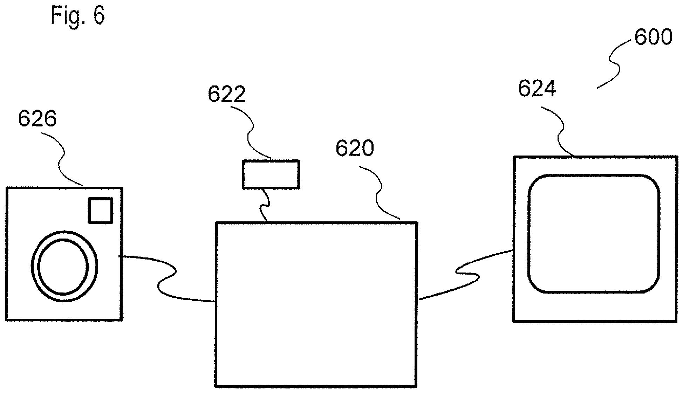

In Fig.6 ist eine graphische Darstellung einer Datenverarbeitungsvorrichtung 600 zum Ausführen einer computergestützten Haarfarbberatung gemäß verschiedenen Ausführungsbeispielen dargestellt.

Die Datenverarbeitungsvorrichtung 600 kann beispielsweise ein Smartphone, ein Tablet, ein PC, ein Laptop oder eine sonstige beliebige Datenverarbeitungsvorrichtung sein oder aufweisen, welche geeignet ist, ein digitales Bild zu verarbeiten und darzustellen. Die computergestützte Haarfarbberatung kann von der Datenverarbeitungsvorrichtung 600 beispielsweise mittels einer App durchgeführt werden. Alternativ kann ein sonstiges computergestütztes Verfahren für die Haarfarbberatung ausgeführt werden.

Die Datenverarbeitungsvorrichtung 600 weist in verschiedenen Ausführungsbeispielen einen Prozessor 620 auf. Der Prozessor 620 kann beispielsweise ein Mikroprozessor 620 der Datenverarbeitungsvorrichtung 600 sein oder einen solchen Mikroprozessor 620 aufweisen. Der Prozessor 620 ist eingerichtet, in einem digitalen Bild einer Person, auf welchem Haare zu sehen sind, eine Haarbereichfläche zu ermitteln, in welcher Haare abgebildet sind, wobei das Ermitteln der Haarbereichfläche ein Ermitteln einer Bildfarbinformations-Häufigkeitsverteilung aufweist, welche einer Häufigkeitsverteilung mindestens einer Farbinformation für eine Mehrzahl von Bildpunkten in dem digitalen Bild entspricht, sowie ein Vergleichen der Bildfarbinformations-Häufigkeitsverteilung mit einer Haarfarben-Statistik, wobei die Haarfarben-Statistik für eine Mehrzahl von Haarfarben jeweils zumindest eine Häufigkeitsverteilung mindestens einer Haarfarbinformation aufweist.

Die Datenverarbeitungsvorrichtung 600 kann eine Datenspeichervorrichtung 622 aufweisen. Die Datenspeichervorrichtung kann ein interner oder externer Datenspeicher 622 einer der genannten Datenverarbeitungsvorrichtungen 600 sein oder einen solchen Datenspeicher 622 aufweisen. Der Datenspeicher 622 kann eingerichtet sein, Daten zu speichern, welche bei einer Durchführung des Verfahrens zur computergestützten Farbberatung gespeichert und/oder abgerufen werden, beispielsweise eine oder mehrere der oben im Zusammenhang mit dem Verfahren zur computergestützten Haarfarbberatung genannten Statistiken, beispielsweise die Statistik häufiger Haarfarben, die Statistik mittels Färbens erzielbarer Haarfarben oder die Statistik häufiger Hautfarben.

Die Datenverarbeitungsvorrichtung 600 kann eine Bildaufnahmevorrichtung 626 aufweisen. Die Bildaufnahmevorrichtung 626 kann beispielsweise eine Kamera, beispielsweise eine digitale Fotokamera eines Smartphones oder eines Tablets, eine Videokamera eines Smartphones, eines Tablets, eine Webcam, einen Bildscanner oder eine sonstige Vorrichtung aufweisen, welche eingerichtet ist, dem Prozessor 620 ein digitales Bild für eine Weiterverarbeitung, beispielsweise wie oben im Zusammenhang mit dem Verfahren beschrieben, in dem Verfahren zur computergestützten Haarfarbberatung zuzuführen.

Die Datenverarbeitungsvorrichtung 600 kann eine Anzeigevorrichtung 624 aufweisen. Die Anzeigevorrichtung 624 kann beispielsweise einen Bildschirm eines Smartphones oder eines Tablets, eines PCs, eines Laptops oder einer sonstigen beliebigen Datenverarbeitungsvorrichtung 600 aufweisen.

Die Datenverarbeitungsvorrichtung 600 kann ferner dazu eingerichtet sein, dass ein Nutzer der Datenverarbeitungsvorrichtung 600 weitere Informationen bereitstellt. Beispielsweise kann die

Anzeigevorrichtung 624 dazu eingerichtet sein, Informationen aufzunehmen. Beispielsweise kann die Anzeigevorrichtung einen berührungsempfindlichen Bildschirm 624, einen so genannten Touchscreen 624 aufweisen. Der Nutzer kann beispielsweise auf dem am dem Touchscreen 624 dargestellten digitalen Bild Bereiche markieren.

Die Datenverarbeitungsvorrichtung 600 kann alternativ oder zusätzlich eine andere Eingabevorrichtung (nicht dargestellt) zum Bereitstellen von Informationen an die Datenverarbeitungsvorrichtung 600 aufweisen, beispielsweise eine Tastatur, eine Maus oder ähnliches.

Weitere vorteilhafte Ausgestaltungen des Verfahrens ergeben sich aus der Beschreibung der Vorrichtung und umgekehrt.

## Patentansprüche

1. Verfahren zur computergestützten Haarfarbberatung, aufweisend:
- Ermitteln einer Haarbereichfläche (104), in welcher Haare abgebildet sind, in einem digitalen Bild (100) einer Person, auf welchem Haare zu sehen sind, umfassend:
• Ermitteln einer Bildfarbinformations-Häufigkeitsverteilung (300), welche einer Häufigkeitsverteilung einer Farbinformation für eine Mehrzahl von Bildpunkten in dem digitalen Bild (100) entspricht;
wobei das Verfahren dadurch charakterisiert ist, dass es ferner umfasst:
• Vergleichen der Bildfarbinformations-Häufigkeitsverteilung (300) mit einer Haarfarben-Statistik, wobei die Haarfarben-Statistik für eine Mehrzahl von Haarfarben jeweils zumindest eine Häufigkeitsverteilung mindestens einer Haarfarbinformation (200, 201) aufweist (in 420);
• Ermitteln einer ähnlichsten Haarfarbinformations-Häufigkeitsverteilung (200) aus der Haarfarben-Statistik, wobei die ähnlichste Haarfarbinformations-Häufigkeitsverteilung (200) diejenige Häufigkeitsverteilung aus der Mehrzahl von Haarfarbinformations-Häufigkeitsverteilungen (200, 201) ist, für welche ein Maß für einen Unterschied zwischen der Haarfarbinformations-Häufigkeitsverteilung (200, 201) und der Bildfarbinformations-Häufigkeitsverteilung (300) am kleinsten ist (in 410); und
• Zuordnen einer Mehrzahl von Bildpunkten in dem Bild, deren jeweilige Farbinformation einer Farbinformation in der ähnlichsten Haarfarbinformations-Häufigkeitsverteilung (200) entspricht, zur Haarbereichfläche (104),
- Darstellen, auf einem Bildschirm, einer Haarfarbe, welche der ähnlichsten Haarfarbinformations-Häufigkeitsverteilung zugeordnet ist.

2. Verfahren gemäß Anspruch 1,
wobei die Haarfarben-Statistik eine Statistik der bei Menschen auftretenden Haarfarben ist und die Mehrzahl von Haarfarben eine Mehrzahl von beim Menschen auftretenden Haarfarben ist.

3. Verfahren gemäß Anspruch 1,
wobei die Haarfarben-Statistik eine Statistik durch Färben erzielbarer Haarfarben ist und die Mehrzahl von Haarfarben eine Mehrzahl von mittels Färbens erzielbaren Haarfarben.

4. Verfahren gemäß einem der Ansprüche 1 bis 3, ferner aufweisend:
• Vergleichen der Bildfarbinformations-Häufigkeitsverteilung (300) mit einer Hautfarben-Statistik, wobei die Hautfarben-Statistik für eine Mehrzahl von beim Menschen häufig vorkommenden Hautfarben jeweils zumindest eine Häufigkeitsverteilung mindestens einer Hautfarbinformation aufweist; und
• Ermitteln einer ähnlichsten Hautfarbinformations-Häufigkeitsverteilung aus der Hautfarben-Statistik, wobei die ähnlichste Hautfarbinformations-Häufigkeitsverteilung diejenige Häufigkeitsverteilung aus der Mehrzahl von Hautfarbinformations-Häufigkeitsverteilungen ist, die der Bildfarbinformations-Häufigkeitsverteilung (300) am ähnlichsten ist.

5. Verfahren gemäß Anspruch 4, wobei das Verfahren ferner aufweist:
Zuordnen mindestens eines Bildpunkts in dem digitalen Bild, dessen Farbinformation einer Farbinformation in den Hautfarbinformationen der ähnlichsten Hautfarbinformations-Häufigkeitsverteilung entspricht, zu einer Hautbereichfläche, wobei die Hautbereichfläche von der Haarbereichfläche (104) verschieden ist.

6. Verfahren gemäß einem der Ansprüche 1 bis 5, ferner aufweisend:
• Ermitteln einer schattigen Haarbereichfläche (104S), wobei mindestens ein Bildpunkt, der der Haarbereichfläche (104) zugeordnet ist und dessen Helligkeit nahe oder bei einer minimalen Helligkeit der Mehrzahl von Bildpunkten in der Haarbereichfläche (104) liegt, der schattigen Haarbereichfläche (104S) zugeordnet wird; und
• Ermitteln einer erhellten Haarbereichfläche (104L), wobei mindestens ein Bildpunkt, der der Haarbereichfläche (104) zugeordnet ist und dessen Helligkeit nahe oder bei einer maximalen Helligkeit der Mehrzahl von Bildpunkten in der Haarbereichfläche (104) liegt, der erhellten Haarbereichfläche (104L) zugeordnet wird.

7. Verfahren gemäß Anspruch 6, ferner aufweisend:
Erzeugen einer Schatten-Licht-Maske, aufweisend:
• Ermitteln einer mittleren Helligkeit in der Haarbereichfläche (104), wobei die mittlere Helligkeit in der Haarbereichfläche (104) einem statistischen Mittelwert der Helligkeiten der Mehrzahl von Bildpunkten in der Haarbereichfläche entspricht;
• für den jeweils mindestens einen Bildpunkt in der schattigen Haarbereichfläche (104S) und in der erhellten Haarbereichfläche (104L), Ermitteln eines Helligkeitsdifferenzwerts zwischen der Helligkeit des mindestens einen Bildpunkts und der mittleren Helligkeit in der Haarbereichfläche (104); und
• Zusammenstellen der Helligkeitsdifferenzwerte zur Schatten-Licht-Maske.

8. Verfahren gemäß Anspruch 1 bis 7, ferner aufweisend:
Festlegen eines Teilbereichs innerhalb des digitalen Bildes durch einen Nutzer, wobei für das Ermitteln der Bildfarbinformations-Häufigkeitsverteilung (300) die Häufigkeitsverteilung in einem Teilbereich ermittelt wird.

9. Verfahren gemäß Anspruch 8,
wobei das Festlegen des Teilbereichs durch den Nutzer ein Markieren des Teilbereichs auf dem auf einem Bildschirm dargestellten Bild der Person aufweist.

10. Verfahren gemäß einem der Ansprüche 1 bis 9, ferner aufweisend:
• vor dem Ermitteln der Haarbereichfläche (104), Erstellen einer Statistik von Farbinformationen und/oder Helligkeitsinformationen der Mehrzahl von Bildpunkten in dem gesamten Bild;
• Ermitteln einer Notwendigkeit für eine Bildkorrektur; und
• Durchführen einer Bildkorrektur, wenn das Ermitteln der Notwendigkeit einer Bildkorrektur ergibt, dass eine Bildkorrektur durchgeführt werden sollte.

11. Verfahren gemäß Anspruch 10,
wobei die Bildkorrektur eine Helligkeitskorrektur und/oder eine Farbkorrektur aufweist.

12. Verfahren zur computergestützten Haarfarbberatung, aufweisend ein Verfahren zum Ermitteln einer Haarbereichfläche in einem digitalen Bild (100) gemäß einem der Ansprüche 3 bis 11, ferner aufweisend:
• Auswählen einer erzielbaren Haarfarbe aus der Mehrzahl mittels Färbens erzielbarer Haarfarben durch den Nutzer; und
• Neueinfärben der Mehrzahl von Bildpunkten in der Haarbereichfläche (104) entsprechend einer Mehrzahl neuer Farbinformationen, wobei jedem Bildpunkt der Mehrzahl von Bildpunkten in der Haarbereichfläche (104) eine neue Farbinformation zugeordnet ist und wobei die Mehrzahl neuer Farbinformationen so gewählt ist, dass ihre Häufigkeitsverteilung der Haarfarbinformations-Häufigkeitsverteilung für die ausgewählte erzielbare Haarfarbe entspricht.

13. Verfahren zur computergestützten Haarfarbberatung gemäß Anspruch 12, aufweisend ein Verfahren zum Ermitteln einer Haarbereichfläche in einem digitalen Bild (100) gemäß Anspruch 7, ferner aufweisend:
Überlagern der neu eingefärbten Haarbereichfläche (104) mit der Schatten-Licht-Maske, wobei das Überlagern der Haarbereichfläche (104) mit der Schatten-Licht-Maske ein Erhellen mindestens eines Bildpunkts innerhalb der erhellten Haarbereichfläche um den diesem Bildpunkt zugeordneten Helligkeitsdifferenzwert und ein Abdunkeln mindestens eines Bildpunkts innerhalb der schattigen Haarbereichfläche (104) um den diesem Bildpunkt zugeordneten Helligkeitsdifferenzwert entspricht.

14. Verfahren gemäß einem der Ansprüche 1 bis 13,
wobei die Farbinformation eine Information bezüglich eines Farbtons ist.

15. Verfahren gemäß Anspruch 14,
wobei der Farbton in einem medienunabhängigen Farbraum parametrisiert ist.

16. Verfahren gemäß Anspruch 15,
wobei der medienunabhängige Farbraum ein L*a*b*-Farbraum ist.

17. Verfahren zur computergestützten Haarfarbberatung, aufweisend ein Verfahren zum Ermitteln einer Haarbereichfläche in einem digitalen Bild (100) gemäß Anspruch 1 ferner aufweisend: Präsentieren mindestens eines Färbemittels, welches der ähnlichsten Haarfarbinformations-Häufigkeitsverteilung zugeordnet ist.

18. Verfahren gemäß Anspruch 17, wobei das Färbemittel ein Färbeprodukt aus einer Produktpalette ist.

19. Datenverarbeitungsvorrichtung zum Ermitteln einer Haarbereichfläche in einem digitalen Bild, aufweisend einen Prozessor (620), wobei der Prozessor (620) eingerichtet ist, in einem digitalen Bild (100) einer Person, auf welchem Haare zu sehen sind, eine Haarbereichfläche (104) zu ermitteln, in welcher Haare abgebildet sind, wobei das Ermitteln der Haarbereichfläche (104) umfasst:
• Ermitteln einer Bildfarbinformations-Häufigkeitsverteilung (300), welche einer Häufigkeitsverteilung einer Farbinformation für eine Mehrzahl von Bildpunkten in dem digitalen Bild (100) entspricht (in 410);
wobei das Ermitteln der Haarbereichfläche dadurch charakterisiert ist, dass es weiter umfasst:
• Vergleichen der Bildfarbinformations-Häufigkeitsverteilung (300) mit einer Haarfarben-Statistik, wobei die Haarfarben-Statistik für eine Mehrzahl von Haarfarben jeweils zumindest eine Häufigkeitsverteilung mindestens einer Haarfarbinformation (200, 201) aufweist (in 420);
• Ermitteln einer ähnlichsten Haarfarbinformations-Häufigkeitsverteilung (200) aus der Haarfarben-Statistik, wobei die ähnlichste Haarfarbinformations-Häufigkeitsverteilung (200) diejenige Häufigkeitsverteilung aus der Mehrzahl von Haarfarbinformations-Häufigkeitsverteilungen (200, 201) ist, für welche ein Maß für einen Unterschied zwischen der Haarfarbinformations-Häufigkeitsverteilung (200, 201) und der Bildfarbinformations-Häufigkeitsverteilung (300) am kleinsten ist; und
• Zuordnen einer Mehrzahl von Bildpunkten in dem Bild, deren jeweilige Farbinformation einer Farbinformation in der ähnlichsten Haarfarbinformations-Häufigkeitsverteilung (200, 201) entspricht, zur Haarbereichfläche (104).

## Claims

1. A method for computer-assisted hair color advice, comprising:
- determining a hair region surface (104), in which hair is depicted, in a digital image (100) of a person on which hair can be seen, comprising:
• determining an image color information frequency distribution (300) which corresponds to a frequency distribution of a piece of color information for a plurality of pixels in the digital image (100);
the method being **characterized in that** it further comprises:
• comparing the image color information frequency distribution (300) with a hair color statistic, the hair color statistic having, for a plurality of hair colors, at least one frequency distribution of at least one piece of hair color information (200, 201) in each case (in 420);
• determining a most similar hair color information frequency distribution (200) from the hair color statistic, the most similar hair color information frequency distribution (200) being the frequency distribution from the plurality of hair color information frequency distributions (200, 201) for which a measurement of a difference between the hair color information frequency distribution (200, 201) and the image color information frequency distribution (300) is smallest (in 410); and
• assigning a plurality of pixels in the image, the respective color information of which corresponds to a piece of color information in the most similar hair color information frequency distribution (200), to the hair region surface (104) ,
- displaying, on a screen, a hair color which is assigned to the most similar hair color information frequency distribution.

2. The method according to claim 1,
wherein the hair color statistic is a statistic of human hair colors and the plurality of hair colors is a plurality of human hair colors.

3. The method according to claim 1,
wherein the hair color statistic is a statistic of hair colors achievable by coloring, and the plurality of hair colors is a plurality of hair colors achievable by coloring.

4. The method according to one of claims 1 to 3, further comprising:
• comparing the image color information frequency distribution (300) with a skin color statistic, wherein the skin color statistic has, for a plurality of skin colors frequently occurring in humans, at least one frequency distribution of at least one piece of skin color information in each case; and
• determining a most similar skin color information frequency distribution from the skin color statistic, wherein the most similar skin color information frequency distribution is the frequency distribution from the plurality of skin color information frequency distributions which is most similar to the image color information frequency distribution (300).

5. The method according to claim 4, wherein the method further comprises:
assigning at least one pixel in the digital image, the color information of which corresponds to a piece of color information in the skin color information of the most similar skin color information frequency distribution, to a skin region surface, wherein the skin region surface is different from the hair region surface (104).

6. The method according to one of claims 1 to 5, comprising:
• determining a shady hair region surface (104S), wherein at least one pixel, which is assigned to the hair region surface (104) and of which the lightness is close to or at a minimum lightness of the plurality of pixels in the hair region surface (104), is assigned to the shady hair region surface (104S); and
• determining a lightened hair region surface (104L), wherein at least one pixel, which is assigned to the hair region surface (104) and of which the lightness is close to or at a maximum lightness of the plurality of pixels in the hair region surface (104), is assigned to the lightened hair region surface (104L).

7. The method according to claim 6, further comprising:
generating a shadow-light mask, comprising:
• determining an average lightness in the hair region surface (104), wherein the average lightness in the hair region surface (104) corresponds to a statistical mean value of the lightness of the plurality of pixels in the hair region surface;
• for each of the at least one pixel in the shady hair region surface (104S) and in the lightened hair region surface (104L), determining a lightness difference value between the lightness of the at least one pixel and the mean lightness in the hair region surface (104); and
• compiling the lightness difference values for the shadow-light mask.

8. The method according to one of claims 1 to 7, further comprising:
the identification of a portion within the digital image by a user, wherein in order to determine the image color information frequency distribution (300) the frequency distribution in a portion is determined.

9. The method according to claim 8,
wherein the definition of the portion by the user comprises marking the portion on the image of the person displayed on a screen.

10. The method according to one of claims 1 to 9, further comprising:
• before determining the hair region surface (104), creating a statistic of color information and/or lightness information of the plurality of pixels in the entire image;
• determining a need for an image correction; and
• performing an image correction when determining the need for an image correction indicates that an image correction should be performed.

11. The method according to claim 10,
wherein the image correction comprises a lightness correction and/or a color correction.

12. A method for computer-assisted hair color advice, comprising a method for determining a hair region surface in a digital image (100) according to one of claims 3 to 11, further comprising:
• the selection, by the user, of an achievable hair color from the plurality of hair colors achievable by means of coloring; and
• recoloring the plurality of pixels in the hair region surface (104) in accordance with a plurality of new pieces of color information, wherein each pixel of the plurality of pixels in the hair region surface (104) is assigned a new piece of color information and wherein the plurality of new pieces of color information are selected so that the frequency distribution thereof of the hair color information frequency distribution corresponds to the selected achievable hair color.

13. The method for computer-assisted hair color advice according to claim 12, comprising a method for determining a hair region surface in a digital image (100) according to claim 7, further comprising:
superimposing the newly colored hair region surface (104) with the shadow-light mask, wherein superimposing the hair region surface (104) with the shadow-light mask corresponds to lightening at least one pixel within the lightened hair region surface by the lightness difference value assigned to this pixel and darkening at least one pixel within the shady hair region surface (104) by the lightness difference value assigned to this pixel.

14. The method according to one of claims 1 to 13,
wherein the color information is information relating to a shade.

15. The method according to claim 14,
wherein the shade is parameterized in a media-independent color space.

16. The method according to claim 15,
where the media-independent color space is a L*a*b* color space.

17. A method for computer-assisted hair color advice, comprising a method for determining a hair region surface in a digital image (100) according to claim 1, further comprising: presenting at least one colorant which is assigned to the most similar hair color information frequency distribution.

18. The method according to claim 17,
wherein the colorant is a color product from a range of products.

19. A data processing device for determining a hair region surface in a digital image, comprising a processor (620), the processor (620) being configured to determine a hair region surface (104), in which hair is depicted, in a digital image (100) of a person on which hair can be seen, determining the hair region surface (104) comprising:
• determining an image color information frequency distribution (300) which corresponds to a frequency distribution of a piece of color information for a plurality of pixels in the digital image (100) (in 410);
determining the hair region surface being **characterized in that** it further comprises:
• comparing the image color information frequency distribution (300) with a hair color statistic, the hair color statistic having, for a plurality of hair colors, at least one frequency distribution of at least one piece of hair color information (200, 201) in each case (in 420);
• determining a most similar hair color information frequency distribution (200) from the hair color statistic, the most similar hair color information frequency distribution (200) being the frequency distribution from the plurality of hair color information frequency distributions (200, 201) for which a measurement of a difference between the hair color information frequency distribution (200, 201) and the image color information frequency distribution (300) is smallest; and
• assigning a plurality of pixels in the image, the respective color information of which corresponds to a piece of color information in the most similar hair color information frequency distribution (200, 201), to the hair region surface (104).

## Revendications

1. Procédé destiné au conseil de couleur de cheveux assisté par ordinateur, présentant :
- la détermination d'une surface de cheveux (104) dans laquelle des cheveux sont représentés sur une image numérique (100) d'une personne sur laquelle des cheveux peuvent être vus, comprenant :
• la détermination d'une distribution de fréquence d'informations de couleur d'image (300) qui correspond à une distribution de fréquence d'informations de couleur pour une pluralité de points d'image dans l'image numérique (100) ;
le procédé étant **caractérisé en ce qu'**il comprend en outre :
• la comparaison de la distribution de fréquence d'informations de couleur d'image (300) avec une statistique de couleurs de cheveux, la statistique de couleurs de cheveux présentant, pour une pluralité de couleurs de cheveux, respectivement au moins une distribution de fréquence d'au moins des informations de couleur de cheveux (200, 201) (en 420) ;
• la détermination d'une distribution de fréquence d'informations de couleur de cheveux (200) la plus similaire à partir de la statistique de couleurs de cheveux, la distribution de fréquence d'informations de couleur de cheveux (200) la plus similaire étant la distribution de fréquence parmi la pluralité de distributions de fréquence d'informations de couleur de cheveux (200, 201) pour laquelle une mesure d'une différence entre la distribution de fréquence d'informations de couleur de cheveux (200, 201) et la distribution de fréquence d'informations de couleur d'image (300) est la plus petite (en 410) ; et
• l'affectation d'une pluralité de points d'image dans l'image, dont les informations de couleur respectives correspondent à des informations de couleur dans la distribution de fréquence d'informations de couleur de cheveux (200) la plus similaire, à la surface de cheveux (104),
- l'affichage, sur un écran, d'une couleur de cheveux qui est affectée à la distribution de fréquence d'informations de couleur de cheveux la plus similaire.

2. Procédé selon la revendication 1,
la statistique de couleurs de cheveux étant une statistique de couleurs de cheveux d'humains et la pluralité de couleurs de cheveux étant une pluralité de couleurs de cheveux d'humains.

3. Procédé selon la revendication 1,
la statistique de couleurs de cheveux étant une statistique de couleurs de cheveux pouvant être obtenues par coloration, et la pluralité de couleurs de cheveux étant une pluralité de couleurs de cheveux pouvant être obtenues par coloration.

4. Procédé selon l'une des revendications 1 à 3, présentant en outre :
• la comparaison de la distribution de fréquence d'informations de couleur d'image (300) avec une statistique de couleurs de peau, la statistique de couleurs de peau présentant, pour une pluralité de couleurs de peau apparaissant fréquemment chez les humains, respectivement au moins une distribution de fréquence d'au moins des informations de couleur de peau ; et
• la détermination d'une distribution de fréquence d'informations de couleur de peau la plus similaire à partir de la statistique de couleurs de peau, la distribution de fréquence d'informations de couleur de peau la plus similaire étant la distribution de fréquence parmi la pluralité de distributions de fréquence d'informations de couleur de peau qui est la plus similaire à la distribution de fréquence d'informations de couleur d'image (300).

5. Procédé selon la revendication 4, le procédé présentant en outre :
l'affectation d'au moins un point d'image dans l'image numérique, dont les informations de couleur correspondent à des informations de couleur dans les informations de couleur de peau de la distribution de fréquence d'informations de couleur de peau la plus similaire, à une surface de peau, la surface de peau étant différente de la surface de cheveux (104).

6. Procédé selon l'une des revendications 1 à 5, présentant en outre :
• la détermination d'une surface de cheveux ombragée (104S), au moins un point d'image, lequel est attribué à la surface de cheveux (104) et dont la luminosité est proche ou à une luminosité minimale de la pluralité de points d'image dans la surface de cheveux (104), étant affecté à la surface de cheveux ombragée (104S) ; et
• la détermination d'une surface de cheveux éclairée (104L), au moins un point d'image, lequel est attribué à la surface de cheveux (104) et dont la luminosité est proche ou à une luminosité maximale de la pluralité de points d'image dans la surface de cheveux (104), étant affecté à la surface de cheveux éclairée (104L).

7. Procédé selon la revendication 6, présentant en outre :
la génération d'un masque ombre-lumière, présentant :
• la détermination d'une luminosité moyenne dans la surface de cheveux (104), la luminosité moyenne dans la surface de cheveux (104) correspondant à une valeur moyenne statistique des luminosités de la pluralité de points d'image dans la surface de cheveux ;
• pour chacun de l'au moins un point d'image dans la surface de cheveux ombragée (104S) et dans la surface de cheveux éclairée (104L), la détermination d'une valeur de différence de luminosité entre la luminosité de l'au moins un point d'image et la luminosité moyenne dans la surface de cheveux (104) ; et
• la compilation des valeurs de différence de luminosité pour le masque ombre-lumière.

8. Procédé selon les revendications 1 à 7, présentant en outre :
la définition d'une sous-zone à l'intérieur de l'image numérique par un utilisateur, la distribution de fréquence dans une sous-zone étant déterminée pour déterminer la distribution de fréquence d'informations de couleur d'image (300).

9. Procédé selon la revendication 8,
la définition de la sous-zone par l'utilisateur présentant le marquage de la sous-zone sur l'image de la personne affichée sur un écran.

10. Procédé selon l'une des revendications 1 à 9, présentant en outre :
• avant la détermination de la surface de cheveux (104), la création d'une statistique d'informations de couleur et/ou d'informations de luminosité de la pluralité de points d'image dans l'image entière ;
• la détermination d'une nécessité de correction d'image ; et
• la mise en œuvre d'une correction d'image lorsque la détermination de la nécessité d'une correction d'image indique que la correction d'image doit être mise en œuvre.

11. Procédé selon la revendication 10,
la correction d'image présentant une correction de luminosité et/ou une correction de couleur.

12. Procédé destiné au conseil de coloration de cheveux assisté par ordinateur, présentant un procédé permettant de déterminer une surface de cheveux dans une image numérique (100) selon l'une des revendications 3 à 11, présentant en outre :
• la sélection d'une couleur de cheveux réalisable parmi la pluralité de couleurs de cheveux réalisables au moyen d'une coloration par l'utilisateur ; et
• la recoloration de la pluralité de points d'image dans la surface de cheveux (104) correspondant à une pluralité de nouvelles informations de couleur, chaque point d'image de la pluralité de points d'image dans la surface de cheveux (104) se voyant attribuer de nouvelles informations de couleur et la pluralité de nouvelles informations de couleur étant sélectionnée de telle sorte que leur distribution de fréquence correspond à la distribution de fréquence d'informations de couleur de cheveux pour la couleur de cheveux réalisable sélectionnée.

13. Procédé destiné au conseil de coloration de cheveux assisté par ordinateur selon la revendication 12, présentant un procédé permettant de déterminer une surface de cheveux dans une image numérique (100) selon la revendication 7, présentant en outre :
la superposition de la surface de cheveux nouvellement colorée (104) avec le masque ombre-lumière, la superposition de la surface de cheveux (104) avec le masque ombre-lumière correspondant à un éclaircissement d'au moins un point d'image à l'intérieur de la surface de cheveux éclaircie par la valeur de différence de luminosité attribuée audit point d'image et à un assombrissement d'au moins un point d'image dans la surface de cheveux ombragée (104) par la valeur de différence de luminosité attribuée audit point d'image.

14. Procédé selon l'une des revendications 1 à 13,
les informations de couleur étant des informations relatives à une nuance de couleur.

15. Procédé selon la revendication 14,
la nuance de couleur étant paramétrée dans un espace colorimétrique indépendant du support.

16. Procédé selon la revendication 15,
l'espace colorimétrique indépendant du support étant un espace colorimétrique L^{*}a^{*}b^{*}.

17. Procédé destiné au conseil de coloration de cheveux assisté par ordinateur, présentant un procédé permettant de déterminer une surface de cheveux dans une image numérique (100) selon la revendication 1, présentant en outre : la présentation d'au moins un agent de coloration qui est affecté à la distribution de fréquence d'informations de couleur de cheveux la plus similaire.

18. Procédé selon la revendication 17,
l'agent de coloration étant un produit de coloration d'une gamme de produits.

19. Dispositif de traitement de données permettant de déterminer une surface de cheveux dans une image numérique, présentant un processeur (620), le processeur (620) étant configuré pour déterminer une surface de cheveux (104) dans une image numérique (100) d'une personne sur laquelle des cheveux peuvent être vus, la détermination de la surface de cheveux (104) comprenant :
• la détermination d'une distribution de fréquence d'informations de couleur d'image (300) qui correspond à une distribution de fréquence d'informations de couleur pour une pluralité de points d'image dans l'image numérique (100) (en 410) ;
la détermination de la surface de cheveux étant **caractérisée en ce qu'**elle comprend en outre :
• la comparaison de la distribution de fréquence d'informations de couleur d'image (300) avec une statistique de couleurs de cheveux, la statistique de couleurs de cheveux présentant, pour une pluralité de couleurs de cheveux, respectivement au moins une distribution de fréquence d'au moins des informations de couleur de cheveux (200, 201) (en 420) ;
• la détermination d'une distribution de fréquence d'informations de couleur de cheveux (200) la plus similaire à partir de la statistique de couleurs de cheveux, la distribution de fréquence d'informations de couleur de cheveux (200) la plus similaire étant la distribution de fréquence parmi la pluralité de distributions de fréquence d'informations de couleur de cheveux (200, 201) pour laquelle une mesure d'une différence entre la distribution de fréquence d'informations de couleur de cheveux (200, 201) et la distribution de fréquence d'informations de couleur d'image (300) est la plus petite ; et
• l'affectation d'une pluralité de points d'image dans l'image, dont les informations de couleur respectives correspondent à des informations de couleur dans la distribution de fréquence d'informations de couleur de cheveux (200, 201) la plus similaire, à la surface de cheveux (104).
